# EUROPÄISCHE PATENTSCHRIFT

(11) **EP 4 479 236 B1**
(45) Veröffentlichungstag und Bekanntmachung des Hinweises auf die Patenterteilung: **28.05.2025**
(21) Anmeldenummer: 23703049.9
(22) Anmeldetag: 01.02.2023
(51) Int. Cl.: B29C 64/124, B29C 64/393, B33Y 10/00, B33Y 50/02

(54) **3D-DRUCKVORRICHTUNG UND 3D-DRUCKVERFAHREN ZUR FERTIGUNG EINES WERKSTÜCKS**
3D PRINTING APPARATUS AND 3D PRINTING METHOD FOR MANUFACTURING A WORKPIECE
APPAREIL D'IMPRESSION 3D ET PROCÉDÉ D'IMPRESSION 3D PERMETTANT DE FABRIQUER UNE PIÈCE À USINER

(30) Priorität: 01.03.2022 DE 102022104797
(43) Veröffentlichungstag der Anmeldung: 25.12.2024
(73) Patentinhaber: Carl Zeiss Vision International GmbH, 73430 Aalen (DE)
(72) Erfinder: GOMARD, Guillaume, 68199 Mannheim (DE); BORRMANN, Bernd, 07751 Zöllnitz (DE); HILLENBRAND, Matthias, 07745 Jena (DE); TOTZECK, Michael, 73525 Schwaebisch Gmuend (DE); ZVAHELSKYI, Roman, 76135 Karsruhe (DE); MAYER, Marc Frederic, 76131 Karlruhe (DE); WEGENER, Martin, 76227 Karlsruhe (DE)
(74) Vertreter: PATERIS Patentanwälte PartmbB
(86) Internationale Anmeldenummer: PCT/EP2023/052469
(87) Internationale Veröffentlichungsnummer: WO 2023/165774

(56) Entgegenhaltungen:
- WO-A1-2020/150251

## Beschreibung

Die Erfindung betrifft 3D-Druckvorrichtungen und ein 3D-Druckverfahren zur Fertigung eines Werkstücks.

Nichtlineare-Absorptions-Polymerisation ist ein Verfahren der additiven Fertigung (3D-Druckverfahren), bei dem ein schichtweiser Aufbau eines dreidimensionalen Werkstücks durch gezielte Polymerisation eines Ausgangsmaterials mit Monomeren und/oder Oligomeren erfolgt. Das Ausgangsmaterial kann auch als Fotolack bezeichnet werden.

Durch Bestrahlung mit Photonen, welche üblicherweise mittels eines Lasers ausgesandt werden, wird der Zerfall eines Photoinitiators in Radikale hervorgerufen, die eine radikalische Polymerisation der Monomere und/oder Oligomere zu einem Polymer bewirken. Nachfolgend können nicht polymerisierte Monomere und/oder Oligomere entfernt, z. B. ausgewaschen werden, so dass das gewünschte Werkstück aus Polymermaterial erhalten wird. Dieser Waschschritt wird auch als Entwickeln des Fotolacks bezeichnet. Mittels nachfolgender chemischer Prozesse kann das Polymermaterial bei Bedarf modifiziert oder umgewandelt werden.

Als Laser werden üblicherweise Femtosekundenlaser, also Laser, deren Lichtpulse eine Dauer im Femtosekundenbereich aufweisen, verwendet. Im Unterschied zur bereits seit längerem bekannten Photopolymerisation ermöglicht die Nichtlineare-Absorptions-Polymerisation die Schaffung von sehr kleinen Strukturgrößen im Bereich von ca. 100 nm. Der Grund hierfür ist, dass für die Radikalbildung mehrere, z. B. zwei, Photonen nicht linear absorbiert werden müssen, was nur an derjenigen Position bzw. in demjenigen Reaktionsvolumen möglich ist, an der bzw. in dem der Energieeintrag ausreichend hoch ist, d. h. im unmittelbaren Fokusbereich des Lasers. Die eingebrachte Leistung ist dabei proportional zu (optische Intensität)^{N}, wobei für lineare Mechanismen N = 1 und für nichtlineare Mechanismen N > 1 ist.

Durch entsprechende Steuerung des Laserfokus in lateraler Richtung und entlang der Tiefenachse kann der Ort der Polymerisationsreaktion folglich genau festgelegt werden, so dass das gewünschte dreidimensionale Werkstück schrittweise aufgebaut werden kann. Das entsprechende Verfahren wird auch als direktes Laserschreiben (abgekürzt "DLW" für englischsprachig "direct laser writing") bezeichnet.

Zwei wesentliche Untergruppen der Nichtlinearen-Absorptions-Polymerisation sind die Zwei-Photonen-Polymerisation sowie die Zwei-Stufen-Absorptions-Polymerisation. Während die Zwei-Photonen-Polymerisation auf einer simultanen Absorption von zwei Photonen beruht, erfolgt bei der Zwei-Stufen-Absorptions-Polymerisation eine Absorption in zwei aufeinanderfolgenden Stufen, wie in HAHN, V., MESSER, T., BOJANOWSKI, N. M., CURTICEAN, E. R., WACKER, I., SCHRÖDER, R. R., BLASCO, E., WEGENER, M. Twostep absorption instead of two-photon absorption in 3D nanoprinting. Nat. Photon., 2021 15, 932-938 beschrieben. Die Grundidee der Zwei-Stufen-Absorption besteht darin, den virtuellen Zustand bei der Zwei-Photonen-Absorption durch einen realen Zustand zu ersetzen, d. h. durch einen elektronischen Zwischenzustand, der ohne das Lichtfeld existiert. Seine Lebensdauer wird in der Regel durch nicht-strahlende Prozesse bestimmt und kann um Größenordnungen länger als Femto- oder Pikosekunden sein. Sofern nicht anders angegeben, wird der Begriff Nichtlineare-Absorptions-Polymerisation hier als Oberbegriff für Zwei-Photonen-Polymerisation und Zwei-Stufen-Absorptions-Polymerisation verwendet.

Mit der praktischen Anwendung der Nichtlinearen-Absorptions-Polymerisation sind mehrere Herausforderungen verbunden, die nachfolgend dargelegt werden.

Verunreinigungen im Ausgangsmaterial können die Qualität der gedruckten Strukturen und damit des gefertigten Werkstücks beeinträchtigen. Beispielsweise können Verunreinigungen die Ausbildung von unerwünschten Lichtstreuzentren im Weg der Strahlung, die die Nichtlineare-Absorptions-Polymerisation bewirken soll, z. B. im Weg eines Femtosekunden (fs)-Laserstrahls, führen. Alternativ oder zusätzlich können Verunreinigungen lokale Inhomogenitäten innerhalb der Voxel im Fokus der Strahlung, z. B. im Laserfokus, bewirken. Dies wiederum kann zu unerwünscht hohen Oberflächenrauheiten, Formabweichungen in Bezug auf das angestrebte 3D-Modell und/oder zu lokalen Inhomogenitäten z. B. der optischen Eigenschaften, z. B. des Brechungsindex, oder der mechanischen Eigenschaften des gedruckten Materials und somit des gefertigten Werkstücks führen.

Mögliche Verunreinigungen können sowohl extrinsische Partikel, z. B. Staubpartikel, als auch intrinsische Inhomogenitäten, die sich im Laufe der Zeit innerhalb des Ausgangsmaterials bilden, darstellen.

Es besteht daher ein Bedürfnis, ein Verfahren aufzufinden, mit dem Verunreinigungen im Ausgangsmaterial analysiert werden können.

Während bei einigen Anwendungen ein einzelnes Element auf ein ebenes und horizontal ausgerichtetes Substrat gedruckt wird, ist es bei anderen Anwendungen beispielsweise erforderlich, eine Struktur zu drucken:
- auf eine Freiformfläche,
- auf Seitenwände, z. B. die Kante eines Substrats wie in JAYNE, R. K., KARAKAN, M. Ç., ZHANG, K., PIERCE, N., MICHAS, C., BISHOP, D. J., CHEN, C. S., EKINCI, K. L., WHITE, A. E. Direct laser writing for cardiac tissue engineering: a microfluidic heart on a chip with integrated transducers. Lab Chip, 2021, 21(9), 1724-1737 beschrieben,
- an die Spitze einer optischen Faser, z. B. beschrieben in GISSIBL, T., THIELE, S., HERKOMMER, A., GIESSEN, H. Sub-micrometre accurate free-form optics by three-dimensional printing on single-mode fibres. Nat Commun, 2016, 7, 11763,
- in halbgeschlossene Hohlräume oder andere schwer zugängliche Bereiche, z. B., um einen mikrofluidischen Kanal zu funktionalisieren ALSHARHAN, A. T., ACEVEDO, R., WARREN, R., SOCHOL, R. D. 3D microfluidics via cyclic olefin polymer-based in situ direct laser writing. Lab Chip, 2019, 19(17), 2799-2810),
- neben und in bereits existierenden Teilen hergestellt durch Nichtlineare-Absorptions-Polymerisation oder auf andere Weise (LAMONT, A. C., RESTAINO, M. A., KIM, M. J., SOCHOL, R. D. A facile multi-material direct laser writing strategy. Lab Chip, 2019, 19(14), 2340-2345), die nur durch ihren Brechungsindex oder durch volumetrische Informationen identifiziert werden können, z. B. sequenzielles Drucken ähnlicher Teile mit alternierenden Photoresisten.

Auch eine Kombination der oben genannten Anforderungen ist möglich. In diesen Fällen kann das anfängliche Positionieren und/oder Ausrichten des Substrats schwierig sein, selbst wenn Ausrichtungsmarken verwendet werden oder wenn eine einzige Echtzeitkamera (Live-View-Kamera) im 3D-Drucker eingesetzt wird.

Es besteht daher ein Bedürfnis, ein Verfahren aufzufinden, mit dem das Positionieren und/oder Ausrichten eines zu bedruckenden Substrats verbessert werden kann.

Es ist bekannt, dass viele Eigenschaften des gebildeten Polymers vom lokalen Umwandlungsgrad (abgekürzt "DC" für englischsprachig "degree of conversion") abhängen. Der Umwandlungsgrad kann dabei definiert werden als der Masseprozentsatz des Ausgangsmaterials (Monomere und/oder Oligomere), die kovalent miteinander verbunden wurden, um das Produkt (Polymer) zu bilden. Die Bestimmung und Kontrolle des Umwandlungsgrads ist von entscheidender Bedeutung, da sich diese Größe auf die mechanischen Eigenschaften, wie z. B. den Elastizitätsmodul, die optischen Eigenschaften, wie z. B. Brechungsindex, und/oder die thermischen Eigenschaften, z. B. thermische Ausdehnung, des hergestellten Werkstücks auswirkt. Die Anpassung des Umwandlungsgrads im Mikrometermaßstab oder sogar darunter ermöglicht darüber hinaus die Herstellung von z. B. Gradientenindex-Optiken (abgekürzt "GRIN") und mechanischen Teilen mit spezifischen Elastizitätsmodul- und Steifigkeitsgradienten.

Der lokale Umwandlungsgrad hängt von der lokal angewendeten Leistung der Strahlungsquelle, also z. B. der Laserleistung, und der lokalen Belichtungszeit während des 3D-Drucks ab. Daher können durch die Messung des lokalen Brechungsindex Informationen über den Umwandlungsgrad abgeleitet werden. Wenn der Umwandlungsgrad von Testproben ex-situ analysiert wird, z. B. mittels spektroskopischer Ellipsometrie, kann die Optimierung der angewandten Strahlungsleistung und der Belichtungszeit sehr zeitaufwändig sein.

Es besteht daher ein Bedürfnis, ein verbessertes Verfahren aufzufinden, mit dem der Umwandlungsgrad ermittelt werden kann. Wünschenswert wäre die Möglichkeit einer in-situ Analyse des Umwandlungsgrads.

Außerdem wäre es hilfreich, den Umwandlungsgrad innerhalb des gedruckten Fotolacks räumlich aufgelöst bestimmen zu können, da der Umwandlungsgrad beabsichtigt oder unbeabsichtigt im Mikrometerbereich oder darunter variieren kann.

Unmittelbar nach dem 3D-Druck kann die Diffusion von Monomeren in eine Grenzschicht zwischen dem unpolymerisierten und dem belichteten Ausgangsmaterial die Strukturschärfe des gedruckten Werkstücks beeinträchtigen. Das Ausmaß und die Zeitabhängigkeit dieses Diffusionsprozesses hängen insbesondere von der Art des verwendeten Ausgangsmaterials und von den Parametern der Nichtlinearen-Absorptions-Polymerisation, z. B. den Laserschreibparametern, ab. Ohne eine In-situ-Kontrollmethode können die Folgen der Monomerdiffusion erst nach dem Auswaschen überschüssigen Ausgangsmaterials, d. h. nach dem Entwickeln des Fotolacks, analysiert werden, was besonders bei langen Druckaufträgen nachteilig ist.

Wünschenswert wäre daher ein Verfahren, dass eine in-situ Analyse der Strukturschärfe, also eine Analyse bereits während des noch andauernden Druckvorgangs, ermöglicht.

Verunreinigungen im Ausgangsmaterial, Schrumpfung des polymerisierten Ausgangsmaterials, Proximity-Effekte, nicht optimierte Laserschreibparameter sind Beispiele für Faktoren, die dazu führen können, dass die tatsächliche Morphologie eines gedruckten Werkstücks von seinem Zielmodell, z. B. einem CAD-Modell (CAD für englischsprachig computer-aided design), abweicht. Unter Proximity-Effekten sind dabei Effekte zu verstehen, die durch die Anwesenheit von bereits gedruckten bzw., polymerisierten Strukturen in unmittelbarer Umgebung verursacht sind. Hierzu zählen u. a. eine Verringerung der minimal benötigten Strahlungsdosis für die Polymerisation, was zu einem Verwischen von feinen Strukturen aufgrund einer räumlich schlechter begrenzten Polymerisationsreaktion führen kann, sowie eine Verringerung der Strahlungsdosis, ab der es zu Beschädigungen bereits vorhandener benachbarter Strukturen kommen kann, wie beispielsweise in SAHA, S. K., DIVIN, C. CUADRA, J. A., PANAS, R. M. Effect of Proximity of Features on the Damage Threshold during submicron Additive Manufacturing via Two-Photon Polymerization, J. Micro Nano-Manuf., Sep 2017, 5(3): 031002.

Über die 3D-Rekonstruktion der tatsächlichen Morphologie mittels in-situ Messungen mit optische Kohärenztomografie wurde bereits berichtet, z. B. in TASHMAN, J. W., SHIWARSKI, D. J., RUESCH, A., LANNI, F., KAINERSTORFER, J., FEINBERG, A. W. In Situ Volumetric Imaging and Analysis of FRESH 3D Bioprinted Constructs Using Optical Coherence Tomography. bioRxiv, 2021, https://doi.org/10.1101/2021.06.30.450389 und WO 2020/ 150 251 A1. Die in diesen beiden Dokumenten beschriebenen Ansätze beruhen jedoch auf Imperfektionen innerhalb der gedruckten Regionen, die zu einem Signal der optischen Kohärenztomografie in idealerweise homogenen Regionen führen. Ohne diese Imperfektionen wäre die Rekonstruktion bestimmter Morphologien nach Beendigung des Druckvorgangs unmöglich.

Wünschenswert wäre daher ein Verfahren, mit dem die vorstehend genannten Nachteile vermieden werden können und das eine 3D-Rekonstruktion auch ohne Vorhandensein von Imperfektionen ermöglicht.

Aus dem Stand der Technik ist eine Vielzahl von Verfahren zur Charakterisierung sowohl von mittels Zwei-Photonen-Polymerisation hergestellten Werkstücke als auch von Zwei-Photonen-Polymerisationsverfahrens bekannt.

Eine Übersicht über Ex-situ- und In-situ-Metrologielösungen, die die Inspektion von durch Zwei-Photonen-Polymerisation erzeugten Mikrostrukturen ermöglichen, findet sich in LAFRATTA, C.N., BALDACCHINI, T. Two-photon polymerization metrology: Characterization methods of mechanisms and microstructures. Micromachines, 2017, 8(4), 101. Die vorgestellten Verfahren dienen insbesondere der Analyse der Strukturgrößen der lasergeschriebenen Materialien, z. B. durch Ex-situ-Rasterelektronenmikroskopie, ihrer Oberflächenrauheit, z. B. durch Ex-situ-Rasterkraftmikroskopie, ihrer Formabweichung gegenüber dem angestrebten 3D-Modell infolge der Schrumpfung bei der Fotopolymerisation oder der Fotolackentwicklung sowie ihres Umwandlungsgrads.

Eine Standardmethode zur Extrapolation des Umwandlungsgrads ist die Differential-Scanning-Kalorimetrie (abgekürzt "DSC"). Sie eignet sich jedoch nicht für Werkstücke, die mittels Nichtlinearer-Absorptions-Polymerisation hergestellt werden, da sie ein Mindestgewicht erfordert, nicht in-situ durchgeführt werden kann und zumeist mit einer Beschädigung der zu untersuchenden Probe verbunden ist. Die Fourier-Transformations-Infrarot-Spektroskopie (abgekürzt "FTIR") kann ebenfalls zur Ermittlung des Umwandlungsgrads eingesetzt werden, stößt aber bei Nichtlinearer-Absorptions-Polymerisation auf mehrere Einschränkungen, insbesondere in Hinblick auf die schlechte räumliche Auflösung.

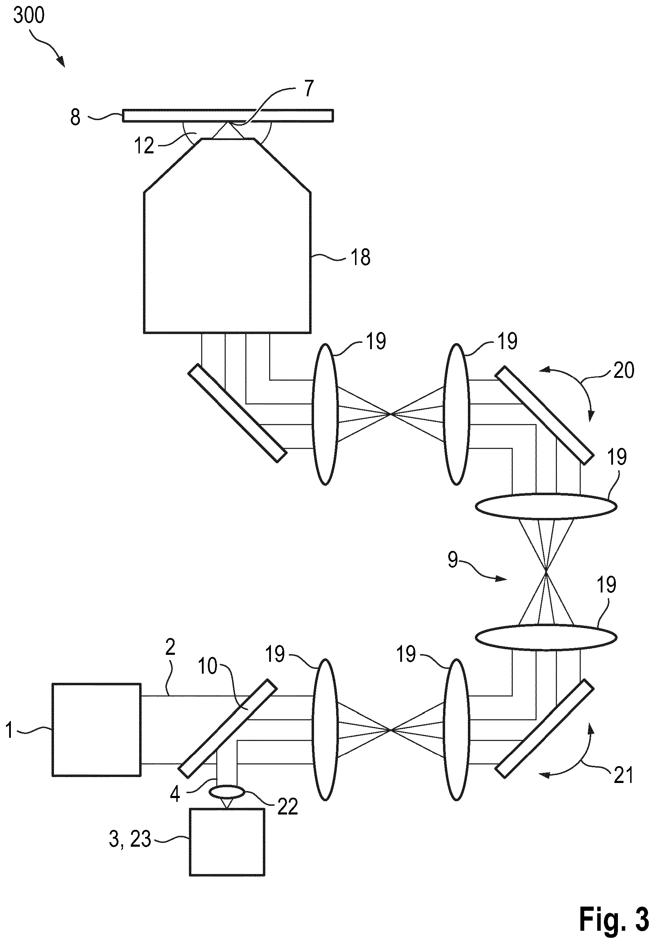

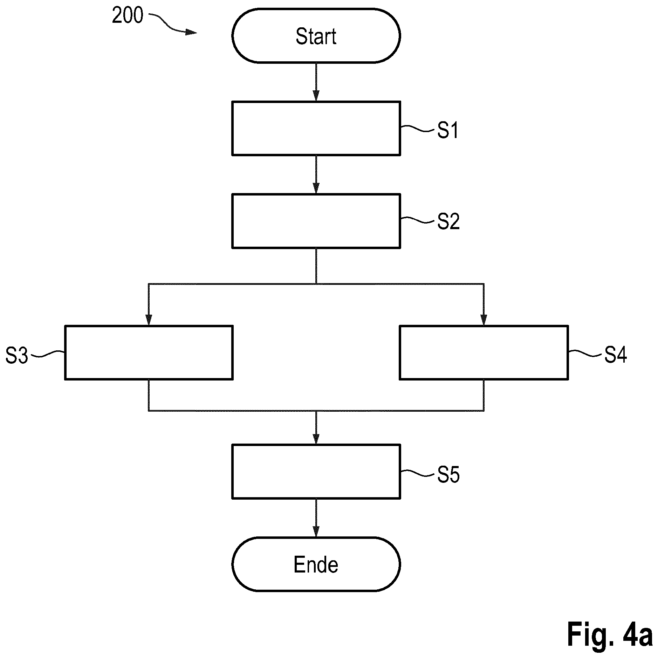

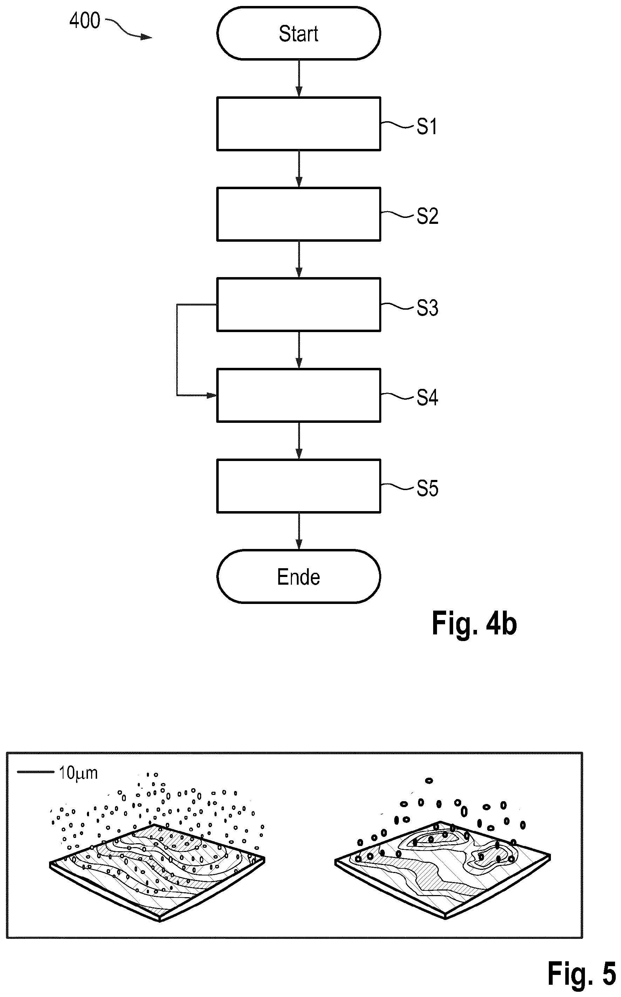

Aus JIANG, L.J., ZHOU, Y.S., XIONG, W., GAO, Y., HUANG, X., JIANG, L., BALDACCHINI, T., SILVAIN, J.-F., LU, Y.F. Two-photon polymerization: investigation of chemical and mechanical properties of resins using Raman microspectroscopy. Optics letters, 2014, 39(10), 3034-3037, insbesondere Abbildung 3, und RYS, J., STEENHUSEN, S., SCHUMACHER, C., CRONAUER, C., DARAIO, C. Locally addressable material properties in 3D micro-architectures. Extreme Mechanics Letters, 2019, 28, 31-36, insbesondere Abbildung 4, geht die Verwendung der Raman-(Mikro-)-Spektroskopie zur Ermittlung und Abbildung des Umwandlungsgrads auf der Mikrometerskala hervor. Der Umwandlungsgrad kann hierbei aus der integrierten Peakintensitätsänderung der C=C-Bindungen abgeleitet werden, die bei der Polymerisation in C-C-Bindungen umgewandelt werden. Obwohl die Raman-(Mikro-)Spektroskopie eine zerstörungsfreie In-situ-Prüfung ermöglicht, wird ihre Anwendbarkeit durch ein kleines Signal-Rausch-Verhältnis behindert, das entweder hohe Laserleistungen oder lange Erfassungszeiten erfordert. Die Erfassungszeiten können mehrere Stunden für die Abbildung von gedruckten Teilen mit einer Größe von einigen zehn Mikrometern betragen, was mit der Echtzeitanalyse während der Nichtlinearer-Absorptions-Polymerisation nicht vereinbar ist.

Diese Einschränkungen lassen sich durch die Mikroskopie mit kohärenter Anti-Stokes-Raman-Streuung (abgekürzt "CARS") umgehen, bei der der für die Herstellung des Werkstücks verwendete Laserstrahl auch zur Erzeugung des Pump- und Stokes-Strahls für die CARS-Bildgebung verwendet werden kann. Dabei hängt die Signalstärke von der Konzentration der C-H-Bindungen ab, die wiederum mit der Dichte des erzeugten Polymers zusammenhängt, siehe Abbildung 3.3.8 in PRINCE, R., FAN, P., LU, Y., BALDACCHINI, T., POTMA, E. O. Visualizing TPP structures with coherent Raman scattering microscopy. In Three-Dimensional Microfabrication Using Two-Photon Polymerization, 2020, S. 229-249, William Andrew Publishing. Der Umwandlungsgrad kann jedoch nur indirekt ermittelt werden, indem zunächst das Raman-Spektrum mit einem Algorithmus zur Phasenbestimmung abgerufen und dann der oben beschriebene Ansatz für die Raman-(Mikro-)Spektroskopie angewendet wird. CARS wurde aufgrund seiner Erfassungsrate in der Größenordnung von Millibis Mikrosekunden und seines Probenvolumens nahe der Größe der gedruckten Voxel als mögliche In-situ-Prozessüberwachungsmethode genannt, siehe BALDACCHINI, T., ZIMMERLEY, M., KUO, C. H., POTMA, E. O., ZADOYAN, R. Characterization of microstructures fabricated by two-photon polymerization using coherent anti-stokes Raman scattering microscopy, J. Phys. Chem. B, 2009, 113(38), 12663-12668 und WO 2011/ 136 919 A1.

Schließlich wurden optische Kohärenztomografie und quantitative Phasenbildgebung kombiniert, um den zeit- und ortsaufgelösten Umwandlungsgrad in Polymertröpfchen zu visualisieren (DONG, B., PAN, B. Visualizing curing process inside polymers. Appl. Phys. Lett., 2020, 116(5), 054103). Eine Voraussetzung für diesen Ansatz ist jedoch, dass das rückgestreute Licht aus dem Volumen der Polymertröpfchen gesammelt wird, was die Einführung zusätzlicher lichtstreuender Nanopartikel in das Polymermedium erforderlich machen kann.

Optische Kohärenztomografie (abgekürzt "OCT") ist ein bildgebendes Verfahren, um hochaufgelöste dreidimensionale Bildaufnahmen beispielsweise aus den verschiedenen Tiefenschichten einer Probe zu erzeugen und anzuzeigen. Hierfür wird elektromagnetische Strahlung, z. B. Infrarotstrahlung mit einer Wellenlänge von ca. 800 bis 1400 nm, das eine zeitlich geringe Kohärenzlänge aufweist, in einem Strahlteiler in zwei Strahlen bzw. Strahlenbündel geteilt, wobei eines der Strahlenbündel auf die zu untersuchende Probe gelenkt wird und das andere Strahlenbündel als Referenz dient und eine Referenzstrecke durchquert. Das von der Probe reflektierte Strahlenbündel wird mit dem Referenz-Strahlenbündel überlagert. Aus dem daraus resultierenden Interferenzsignal kann dann eine Bildaufnahme erzeugt werden, dass die Strukturen der Probe entlang der Tiefenachse zeigt, wobei durch laterales Scannen über die zu analysierende Probe dreidimensionale optische Kohärenztomografie-Aufnahmen, d. h. OCT-Aufnahmen aus den zweidimensionalen Tiefensignalen, erzeugt werden können.

Zur Durchführung der optischen Kohärenztomografie kann beispielsweise Infrarotstrahlung mit einer Wellenlänge von ca. 800 nm bis 1400 nm oder auch sichtbares Licht mit einer Wellenlänge zwischen ca. 400 nm bis 800 nm genutzt werden. Auch die Verwendung von Infrarotstrahlung mit einer größeren Wellenlänge, z. B. von bis zu ca. 2 µm, wäre grundsätzlich möglich. Die Verwendung von sichtbaren Licht hat den Vorteil einer höheren räumlichen Auflösung, jedoch kann die Verwendung von sichtbarem Licht zu Problemen hinsichtlich einer unerwünschten Absorption im Ausgangsmaterial führen.

OCT wurde bereits als Online-Überwachungssystem für die allgemeine Anwendung bei 3D-Druckverfahren und aufgrund seiner zerstörungsfreien Anwendbarkeit und seiner großen Eindringtiefe in wenig absorbierende Materialien vorgeschlagen (US 10 649 439 B2). Eine Anwendung betraf den Vergleich der tatsächlich gedruckten Struktur mit den Entwurfsparametern des Modells. Diese Strategie wurde auch im Bereich des Bioprinting verfolgt, um eine In-situ-Prozessüberwachung mittels OCT in Verbindung mit einem 3D-Extrusions-Biodrucker zu erreichen (YANG, S., WANG, L., CHEN, Q., XU, M. In situ process monitoring and automated multi-parameter evaluation using optical coherence tomography during extrusion-based bioprinting. Additive Manufacturing 47, 102251, 2021; TASHMAN, J. W., SHIWARSKI, D. J., RUESCH, A., LANNI, F., KAINERSTORFER, J., FEINBERG, A. W. In Situ Volumetric Imaging and Analysis of FRESH 3D Bioprinted Constructs Using Optical Coherence Tomography. bioRxiv, 2021, https://doi.org/10.1101/2021.06.30.450389). Mithilfe einer Messsoftware wurden die Abweichungen der 3D-OCT-Rekonstruktion vom ursprünglichen 3D-Modell deutlich sichtbar (siehe Abbildung S5 in TASHMAN, J. W., SHIWARSKI, D. J., RUESCH, A., LANNI, F., KAINERSTORFER, J., FEINBERG, A. W. In Situ Volumetric Imaging and Analysis of FRESH 3D Bioprinted Constructs Using Optical Coherence Tomography. bioRxiv, 2021, https://doi.org/10.1101/2021.06.30.450389).

US 2016 / 0 023 403 A1 beschreibt die Nutzung der OCT als Bildverarbeitungseinheit, um die Konformität der nacheinander aufgebrachten Schichten in einem additiven Fertigungsverfahren zu kontrollieren und mögliche Abweichungen zu korrigieren.

US 2019 / 0 163 067 A1 offenbart die Verwendung von OCT als eine mögliche messtechnische Methode zur Charakterisierung der Oberflächentopografie vor dem Druck, insbesondere bei nicht ebenen Substraten.

WO 2020/ 150 251 A1, entsprechend dem Oberbegriff der unabhängigen Ansprüche 1 und 8, offenbart eine spezielle OCT-Implementierung, die polarisationsempfindliche OCT (PS-OCT), für die Überwachung des Zwei-Photonen-Polymerisationsprozesses. PS-OCT wurde hierfür wegen seiner Fähigkeit ausgewählt, Informationen über die Doppelbrechung des ausgehärteten Materials zu liefern, die als ein häufiges Problem beim 3D-Druck von Polymeren genannt wird. Für die Bestimmung des Aushärtungsvolumens und -grades unter verschiedenen Aushärtungsbedingungen wurde hingegen eine Analyse mittels Hochgeschwindigkeitskamera und Raman-Spektroskopie vorgeschlagen. Die vorgeschlagene Anordnung der Strahlungsquellen für die Zwei-Photonen-Polymerisation sowie die PS-OCT sieht die gemeinsame Nutzung optischer Elemente vor. Als Strahlteiler ist ein dichroitischer Spiegel vorgesehen, was jedoch die Verwendung von Strahlungsquellen mit deutlich voneinander verschiedenen Wellenlängen voraussetzt. Dies schränkt die Auswahl der weiteren gemeinsam nutzbaren optischen Elemente ein, da diese entsprechend für beide Wellenlängen geeignet sein müssen.

Vor diesem Hintergrund ist es Aufgabe der Erfindung, Vorrichtungen und Verfahren anzugeben, welche eine verbesserte in-situ Prozessüberwachung eines Nichtlinearen-Absorptions-Polymerisation-Verfahrens und eine möglichst genaue Analyse der Ausgangsmaterialien, Produkte und verwendeten Substrate eines solchen Verfahrens ermöglichen.

Gelöst wird diese Aufgabe durch die Gegenstände der unabhängigen Ansprüche. Die abhängigen Ansprüche betreffen Ausgestaltungen der erfindungsgemäßen Lösungen.

Ein erster Aspekt der Erfindung betrifft eine 3D-Druckvorrichtung zur Fertigung eines Werkstücks. Die Erfindung ist nicht auf ein besonderes Anwendungsgebiet beschränkt, wobei bevorzugt mikro- und/oder nanostrukturierte Werkstücke gefertigt werden können.

Die Vorrichtung weist eine erste Strahlungsquelle auf, die zum Aussenden einer ersten Strahlung zur Durchführung einer Nichtlinearen-Absorptions-Polymerisation, beispielsweise einer Zwei-Photonen-Polymerisation, ausgebildet ist. Mit anderen Worten bewirkt die erste Strahlung eine Nichtlineare-Absorptions-Polymerisation eines Ausgangsmaterials wie einleitend beschrieben. Die erste Strahlungsquelle kann als Laserlichtquelle, beispielsweise als fs-Laser, ausgebildet sein. Die Wellenlänge der ersten Strahlung kann beispielsweise den Spektralbereich zwischen 760 und 800 nm teilweise oder vollständig abdecken und/oder den Spektralbereich zwischen 1520 und 1600 nm. Die Wellenlänge der ersten Strahlung kann auch im Wellenlängenbereich zwischen 1000 und 1100 nm liegen, z. B. bei Verwendung eines ultraschnellen Yb-dotierten Faserlasers als erster Strahlungsquelle. Auch der Einsatz eines CW-Lasers, z. B. mit einer Wellenlänge von 405 nm, kann möglich sein. Je nach Zielwellenlänge, also der für die Nichtlineare-Absorptions-Polymerisation benötigten Wellenlänge, und gewünschter Pulsbreite sind auch andere Spektralbereiche möglich.

Neben der ersten Strahlungsquelle weist die Vorrichtung eine zweite Strahlungsquelle auf, die zum Aussenden einer zweiten Strahlung zur Durchführung einer optischen Kohärenztomografie ausgebildet ist. Mit anderen Worten kann mittels der zweiten Strahlung eine optische Kohärenztomografie durchgeführt werden, um beispielsweise die Nichtlineare-Absorptions-Polymerisation, insbesondere in-situ, zu überwachen.

Je nach spezifischen Gegebenheiten, z. B. in Abhängigkeit der für den Zerfall des Photoinitiators im Ausgangsmaterial bei der Nichtlinearen-Absorptions-Polymerisation benötigten Wellenlänge, kann die Wellenlänge der zweiten Strahlung beispielsweise derart gewählt sein, dass sie kleiner als die Wellenlänge der ersten Strahlung ist. Hierdurch kann vorteilhaft das axiale Auflösungsvermögen der optischen Kohärenztomografie erhöht werden, da der minimale Abstand von zwei in axialer z-Richtung auflösbarer Punkte proportional zum Quadrat der Wellenlänge verhält, d. h. es gilt Δz ∝ λ².

Alternativ kann die Wellenlänge der zweiten Strahlung beispielsweise derart gewählt sein, dass sie größer als die Wellenlänge der ersten Strahlung ist. Bevorzugt kann die Wellenlänge der zweiten Strahlung größer als 500 nm sein. Dadurch kann vorteilhaft in vielen Fällen eine unerwünschte Absorption der zweiten Strahlung im Ausgangsmaterial vermieden werden, da typischerweise genutzte Photoinitiatoren bei einer Wellenlänge zwischen 350 nm und 500 nm zerfallen. Die Wellenlänge der zweiten Strahlung kann beispielsweise zwischen 750 nm und 1400 nm, bevorzugt zwischen 750 nm und 950 nm, weiter bevorzugt zwischen 780 nm und 920 nm, liegen, oder aber auch zwischen 900 nm und 1100 nm betragen. Weiter bevorzugt sollte die zweite Strahlungsquelle keine gepulste Strahlungsquelle und folglich die zweite Strahlung keine gepulste Strahlung sein, um ein unbeabsichtigtes Auslösen eine Nichtlineare-Absorptions-Polymerisation zu vermeiden. Die zweite Strahlungsquelle kann beispielsweise als durchstimmbarer Laser oder breitbandige Strahlungsquelle, z. B. als Superlumineszenzdiode, ausgebildet sein. Die hohe spektrale Bandbreite dieser Strahlungsquellen ermöglicht eine große axiale Auflösung bei der Durchführung der optischen Kohärenztomografie.

Von der ersten Strahlung ist ein erster Strahlengang passierbar und von der zweiten Strahlung ist ein zweiter Strahlengang passierbar. D. h., die erste Strahlung gelangt von der ersten Strahlungsquelle über den ersten Strahlengang bis zur Position im Ausgangsmaterial, an der eine Nichtlineare-Absorptions-Polymerisation bewirkt werden soll. Die zweite Strahlung gelangt hingegen von der zweiten Strahlungsquelle über den zweiten Strahlengang zu dem Ort, der mittels optischer Kohärenztomografie analysiert werden soll.

Optional können die Position im Ausgangsmaterial und der Ort, der mittels optischer Kohärenztomografie analysiert werden soll, also die Fokuspunkte der ersten und zweiten Strahlung, einander entsprechen oder gezielt geringfügig voneinander abweichen, um beispielsweise eine Analyse mittels optischer Kohärenztomografie unmittelbar vor, während oder unmittelbar nach der Nichtlinearen-Absorptions-Polymerisation durchführen zu können.

Des Weiteren ist vorgesehen, dass der erste Strahlengang und der zweite Strahlengang vollständig voneinander unabhängig, d. h. separat, ausgebildet sind. Folglich kann die erste Strahlung entlang des ersten Strahlengangs geführt werden, bis die erste Strahlung an einem Fokuspunkt der ersten Strahlung auf einen Polymerisationsort des zu polymerisierendes Ausgangsmaterials auftrifft. Die zweite Strahlung kann entlang des zweiten Strahlengangs geführt werden, bis die zweite Strahlung an einem Fokuspunkt der zweiten Strahlung auf einen Analyseort einer zu analysierende Probe auftrifft. Eine gemeinsame Nutzung optischer Elemente für den ersten und zweiten Strahlengang ist nicht vorgesehen, d. h., der erste und der zweite Strahlengang verlaufen von der ersten bzw. zweiten Strahlungsquelle bis zum Fokuspunkt der ersten bzw. zweiten Strahlung voneinander unabhängig bzw. separat voneinander.

Dadurch wird vorteilhaft eine gleichzeitige, d h. simultane, Durchführung der Nichtlinearen-Absorptions-Polymerisation und der optischen Kohärenztomografie ermöglicht. Darüber hinaus ermöglicht die separate Ausbildung der beiden Strahlengänge, die Wellenlänge der zweiten Strahlung zur Durchführung der optischen Kohärenztomografie unabhängig von der Wellenlänge der ersten Strahlung zur Durchführung der Nichtlinearen-Absorptions-Polymerisation auszuwählen bzw. umgekehrt. Weiterhin können die Fokuspunkte der ersten und zweiten Strahlung unabhängig voneinander gleich oder unterschiedlich gewählt werden. Folglich können Nichtlineare-Absorptions-Polymerisation und optische Kohärenztomografie zeitgleich am gleichen Fokuspunkt oder an verschiedenen Fokuspunkten durchgeführt werden. Verschiedene Fokuspunkte können beispielsweise genutzt werden, um eine OCT-Analyse des fertig polymerisierten Ausgangsmaterials vornehmen zu können. Aufgrund des eine gewisse Zeit andauernden Polymerisationsprozesses wäre hierfür ein gegenüber dem Fokuspunkt der ersten Strahlung um z. B. mehrere laterale Schreibzeilen versetzter Fokuspunkt der zweiten Strahlung hilfreich.

Zudem kann die voneinander unabhängige Ausbildung der Strahlengänge eine einfachere praktische Umsetzung ermöglichen als bei einem zumindest teilweise gemeinsam genutzten Strahlengang, beispielsweise in Hinblick auf den zur Verfügung stehenden Bauraum. Mittels der vorgeschlagenen 3D-Druckvorrichtung kann während einer Nichtlinearen-Absorptions-Polymerisation eine Analyse mittels optischer Kohärenztomografie in-situ und in Echtzeit durchgeführt werden.

Um unerwünschte Rückreflexionen von der Substrat- oder Küvettenoberfläche zu verringern und somit ein hohes Signal-Rausch-Verhältnis bei der optischen Kohärenztomografie zu erhalten, ist für die OCT-Bildgebung, also im zweiten Strahlengang, im Allgemeinen die Verwendung von Immersionsobjektiven bevorzugt.

Die numerisch Apertur NA des Objektivs im zweiten Strahlengang kann in Abhängigkeit der konkreten Anwendung unterschiedlich gewählt sein. Ist beispielsweise eine OCT-Analyse in einem lateral und axial kleinen Volumenbereich mit hoher Auflösung gewünscht, so kann das Objektiv bevorzugt eine hohe numerische Apertur NA aufweisen. Ist hingegen eine OCT-Analyse eines in der Tiefe ausgedehnten Bereichs gewünscht, so kann das Objektiv bevorzugt eine kleine numerische Apertur NA aufweisen, beispielsweise eine numerische Apertur NA < 0,5 oder sogar NA < 0,25. Bei einer kleinen effektiven numerischen Apertur NA reduziert sich zwar die laterale Bildauflösung, es vergrößert sich aber die Bildgröße in axialer Richtung, was zur dreidimensionalen Abbildung hoher gedruckter Strukturen wichtig ist.

Sowohl im ersten als auch im zweiten Strahlengang sind optische Elemente angeordnet, die bildformend sein können und entlang einer optischen Achse angeordnet sind. Beispiele für optische Elemente sind u. a. Linsen und Spiegel. Am der jeweiligen Strahlungsquelle gegenüberliegenden Ende jedes Strahlengangs ist ein Objektiv angeordnet, dass die erste bzw. zweite Strahlung auf einen Fokuspunkt fokussiert. Der Fokuspunkt entspricht dabei derjenigen Position bzw. demjenigen Ort, an dem die Nichtlineare-Absorptions-Polymerisation stattfindet bzw. an dem die Analyse mittels optischer Kohärenztomografie durchgeführt wird. Der Fokuspunkt kann bewegt werden, indem beispielsweise im Strahlengang angeordnete Spiegel entsprechend bewegt werden. Der Bewegungspfad des Fokuspunkts kann auch als Trajektorie bezeichnet werden.

Das Objektiv im ersten und zweiten Strahlengang kann als Immersionsobjektiv ausgebildet sein. Optional kann das Objektiv des ersten Strahlengangs derart angeordnet sein bzw. werden, dass das Objektiv in das Ausgangsmaterial eintaucht.

Weiterhin kann die 3D-Druckvorrichtung unter anderem Folgendes aufweisen:
- eine Positionier- und Halteeinheit zum Positionieren und Halten des Ausgangsmaterials sowie ggf. des Substrats,
- eine Steuereinheit, eingerichtet und ausgebildet zur Steuerung der ersten und zweiten Strahlungsquelle sowie zur Steuerung von in den Strahlengängen angeordneter optischer Elemente, um eine Veränderung des Fokuspunkts der ersten Strahlung und des Fokuspunkts der zweiten Strahlung bewirken zu können,
- eine Analyseeinheit, eingerichtet und ausgebildet zur Generierung von OCT-Bildaufnahmen basierend auf der zweiten Strahlung,
- eine Speichereinheit, eingerichtet und ausgebildet zur Speicherung von OCT-Bildaufnahmen und/oder zur Speicherung von CAD-Modellen des zu fertigenden Werkstücks, und/oder
- eine Auswerteeinheit, eingerichtet und ausgebildet zum Erstellen von 3D-OCT-Scans aus mehreren OCT-Bildaufnahmen.

Gemäß verschiedenen Ausführungsvarianten können der erste Strahlengang und der zweite Strahlengang derart ausgebildet sind, dass die erste Strahlung und die zweite Strahlung unter einem Winkel α aufeinander treffen, wobei 0°< α < 180 °, beispielsweise 0°< α ≤ 90 °, gilt.

Der Winkel α bezeichnet dabei den kleineren der beiden Winkel, der zwischen den Hauptstrahlen der ersten und der zweiten Strahlung an einem tatsächlichen oder fiktiven Schnittpunkt der Hauptstrahlen der ersten und der zweiten Strahlung in der gemeinsamen Ebene der Hauptstrahlen der ersten und zweiten Strahlung ausgebildet wird. Hierbei beziehen sich der Schnittpunkt und die Ebene auf den jeweils letzten geradlinigen Abschnitt der Hauptstrahlen der ersten bzw. zweiten Strahlung vor Auftreffen auf den Fokuspunkt. Ein tatsächlicher Schnittpunkt ist gegeben, sofern der Fokuspunkt des Hauptstrahles der ersten Strahlung mit dem Fokuspunkt des Hauptstrahls der zweiten Strahlung übereinstimmt oder beide Fokuspunkte derart angeordnet sind, dass die Hauptstrahlen beider Strahlungen aufeinandertreffen, bevor der jeweilige Fokuspunkt erreicht wird. Sind die Fokuspunkte der Hauptstrahlen der beiden Strahlungen hingegen derart angeordnet, dass sich der Hauptstrahl der ersten Strahlung und der Hauptstrahl der zweiten Strahlung nicht schneiden, so wird ein fiktiver Schnittpunkt durch fiktive Verlängerung der Hauptstrahlen der ersten bzw. zweiten Strahlung ausgebildet. Der Begriff Hauptstrahl bezeichnet einen Strahl, der vom Objekt oder Bildpunkt durch das Zentrum der Pupille verläuft.

Beispielsweise kann der Winkel α derart gewählt sein oder werden, dass die erste Strahlung und/oder die zweite Strahlung das Substrat nicht durchqueren. Dadurch können vorteilhaft auch Substrate bedruckt werden, die nicht transparent für die verwendete erste und/oder zweite Strahlung sind.

Bevorzugt kann der Winkel α derart gewählt sein oder werden, dass die Menge an bereits polymerisiertem Ausgangsmaterial außerhalb des Beobachtungsvolumens, welches die zweite Strahlung passieren muss, minimiert ist. Weiter bevorzugt kann der Winkel α derart gewählt sein oder werden, dass die zweite Strahlung nicht durch bereits polymerisiertes Ausgangsmaterial verläuft.

Beispielsweise kann α = 90° - ω/2 gelten, wobei ω der objektseitige Öffnungswinkel des zweiten Strahlengangs ist. Hierdurch können Schwierigkeiten und Fehlinterpretationen bei der Auswertung der OCT-Signale vermieden werden, die anderenfalls beispielsweise durch eine Überlagerung eines Teils der zweiten Strahlung, welcher bereits polymerisiertes Ausgangsmaterial durchquert, mit einem Teil der zweiten Strahlung, welcher kein bereits polymerisiertes Ausgangsmaterial durchquert, hervorgerufen werden könnten.

Beispielsweise kann der Winkel α = 90° sein. Die senkrechte Ausrichtung der ersten und zweiten Strahlung zueinander kann die Abstimmung der Fokuspunkte der ersten und zweiten Strahlung aufeinander vereinfachen.

Sollten sich die Hauptstrahlen der ersten und der zweiten Strahlung nicht in einer gemeinsamen Ebene befinden, können die Hauptstrahlen der ersten und der zweiten Strahlung auch windschief zueinander ausgerichtet sein, d. h. die Hauptstrahlen können in der Tiefe zueinander versetzt angeordnet sein, sich aber nicht schneiden. In der 2D-Projektion können die obigen Ausführungen entsprechend auf den Winkel α zutreffen, d. h. es kann beispielsweise α = 90° - ω/2 gelten.

Der erste Strahlengang kann bevorzugt derart ausgebildet und angeordnet sein, dass die erste Strahlung parallel zur Normalen der Substratoberfläche, also im Wesentlichen senkrecht, auf die Substratoberfläche auftrifft. Optional kann die Vorrichtung hierfür eine Positioniereinrichtung für das zu bedruckende Substrat derart aufweisen, dass eine Positionierung der Substratoberfläche bezüglich der ersten Strahlung ermöglicht ist. Dies kann zu einer höheren Genauigkeit der zu druckenden Strukturen beitragen.

Der zweite Strahlengang kann bezüglich der zu bedruckenden Substratoberfläche derart ausgebildet und angeordnet sein, dass die zweite Strahlung mit einem von 90° zur Normalen der Substratoberfläche verschiedenen Winkel, also nicht parallel zur Substratoberfläche, auf die Substratoberfläche auftrifft. Optional kann die Vorrichtung hierfür eine Positioniereinrichtung für das zu bedruckende Substrat derart aufweisen, dass eine Positionierung der Substratoberfläche bezüglich der zweiten Strahlung ermöglicht ist. Hierdurch kann eine unerwünschte innere Totalreflektion mit der Folge von nicht ausreichend auswertbaren OCT-Signalen vermieden werden, da üblicherweise keine genaue Übereinstimmung zwischen dem Brechungsindex des Substrats und dem Brechungsindex der Immersionsflüssigkeit bzw. des Ausgangsmaterials vorliegt. Ein Winkel von kleiner 90° zur Normalen der Substratoberfläche kann zudem vorteilhaft sein, falls Strukturen zu analysieren sind, die in vertikale Seitenwände mit überhängenden Elementen eingebaut sind.

Das Ausgangsmaterial kann in einem für die verwendete Strahlung transparenten Behältnis, z. B. einer transparenten Küvette, angeordnet sein, in dem der 3D-Druckvorgang durchgeführt wird.

Alternativ können eine oder beide Objektivlinsen des ersten und zweiten Strahlengangs auch direkt in das Ausgangsmaterial getaucht sein oder werden. Dies hat den Vorteil, dass ein Behältnis gewählt werden kann, welches für die erste und/oder zweite Strahlung nicht transparent ist.

Gemäß weiteren Ausführungsvarianten kann der zweite Strahlengang derart ausgebildet sein, dass die zweite Strahlung durch ein zu bedruckendes Substrat hindurch auf einen Fokuspunkt auftrifft.

Diese Ausführungsvariante setzt voraus, dass das Substrat ausreichend transparent für die zweite Strahlung ist. Der Arbeitsabstand des Objektivs im zweiten Strahlengang, das bevorzugt als Immersionsobjektiv ausgebildet sein kann, sollte bevorzugt derart gewählt werden, dass OCT-Aufnahmen durch das Substrat, das beispielsweise eine Substratdicke von einigen mm aufweisen kann, möglich sind. Ein großer Arbeitsabstand ist in diesem Fall auch deshalb von Vorteil, da der Arbeitsabstand die maximale Höhe gedruckter Strukturen, die abgebildet werden können, begrenzt.

Da an den Eintrittsflächen des Objektivs im zweiten Strahlengang eine optisch glatte Oberfläche erforderlich ist, damit bei der Abbildung keine Aberrationen entstehen, hat die Ausführungsvariante, bei der die zweite Strahlung durch das Substrat geführt wird, den Vorteil, dass das Substrat selbst bereits diese optisch glatte Oberfläche darstellt und keine separate optisch glatte Oberfläche, z. B. in Form einer Küvette mit einer optisch glatten Oberfläche, erforderlich ist.

Beispielsweise können die erste Strahlung und die zweite Strahlung aus einander entgegengesetzten Richtungen, beispielsweise im Wesentlichen parallel zueinander, auf ihren Fokuspunkt auftreffen. Mit anderen Worten kann der Winkel α, unter dem die erste Strahlung und die zweite Strahlung aufeinandertreffen α = 180° betragen. Dies hat den Vorteil, dass die Objektive des ersten und zweiten Strahlengangs weit voneinander entfernt angeordnet werden können und daher die Wahrscheinlichkeit einer mechanischen Kollision beider Objektive verringert ist. Zudem ist die Objektivauswahl aufgrund des größeren Bauraums weniger eingeschränkt.

Bevorzugt können die erste Strahlung und/oder die zweite Strahlung senkrecht auf die Substratoberfläche auftreffen.

Alternativ oder zusätzlich kann auch der erste Strahlengang derart ausgebildet sein, dass die erste Strahlung durch das zu bedruckende Substrat hindurch auf einen Fokuspunkt trifft ("through-substrate Konfiguration"). Diese Konfiguration vergrößert die Auswahl des Ausgangsmaterials, da nicht alle Ausgangsmaterialien in der "dip-in"-Konfiguration, bei der die Objektivlinse in das Ausgangsmaterial eintaucht genutzt werden können, ohne die Objektivlinse zu beschädigen. Abgesehen von der chemischen Kompatibilität zwischen Ausgangsmaterial und Objektivlinse sollte bei einer "dip-in"-Konfiguration der Brechungsindex des Ausgangsmaterials auf die verwendete Objektivlinse abgestimmt sein, was nicht in allen Fällen zufriedenstellend realisierbar ist. Im Gegensatz dazu kann bei der "through-substrate"-Konfiguration potenziell eine größere Vielfalt an Ausgangsmaterialien mit unterschiedlichen Brechungsindizes gezielt gedruckt werden. Dies liegt daran, dass die erste Strahlung bei dieser Konfiguration nur eine vergleichsweise geringe Strecke im Ausgangsmaterial zurücklegt, was die Aberrationen minimiert, auch wenn der Brechungsindex nicht angepasst ist. Allerdings ist bei der "through-substrate"-Konfiguration die maximale Höhe des 3D-Drucks begrenzt, da einerseits Aberrationen durch die gedruckten Strukturen auftreten und andererseits der Arbeitsabstand des verwendeten Objektivs die Strukturhöhe begrenzt, um eine Kollision zwischen Substrat und Objektiv zu vermeiden.

Ein weiterer Aspekt der Erfindung betrifft eine weitere 3D-Druckvorrichtung zur Fertigung eines Werkstücks.

Die weitere Vorrichtung weist eine erste Strahlungsquelle auf, die zum Aussenden einer ersten Strahlung zur Durchführung einer Nichtlinearen-Absorptions-Polymerisation ausgebildet ist. Mit anderen Worten bewirkt die erste Strahlung eine Nichtlineare-Absorptions-Polymerisation eines Ausgangsmaterials wie einleitend beschrieben. Die erste Strahlungsquelle kann als Laserlichtquelle, beispielsweise als fs-Laser, ausgebildet sein. Die Wellenlänge der ersten Strahlung kann beispielsweise den Spektralbereich zwischen 760 und 800 nm abdecken oder den Spektralbereich zwischen 1520 und 1600 nm. Je nach Zielwellenlänge, also der für die Nichtlineare-Absorptions-Polymerisation benötigten Wellenlänge, und gewünschter Pulsbreite sind auch andere Spektralbereiche möglich.

Neben der ersten Strahlungsquelle weist die weitere Vorrichtung eine zweite Strahlungsquelle auf, die zum Aussenden einer zweiten Strahlung zur Durchführung einer optischen Kohärenztomografie ausgebildet ist. Mit anderen Worten kann mittels der zweiten Strahlung eine optische Kohärenztomografie durchgeführt werden, um beispielsweise die Nichtlineare-Absorptions-Polymerisation, insbesondere in-situ, zu überwachen.

Je nach spezifischen Gegebenheiten, z. B. in Abhängigkeit der für den Zerfall des Photoinitiators im Ausgangsmaterial bei der Nichtlinearen-Absorptions-Polymerisation benötigten Wellenlänge, kann die Wellenlänge der zweiten Strahlung beispielsweise derart gewählt sein, dass sie kleiner als die Wellenlänge der ersten Strahlung ist. Hierdurch kann vorteilhaft das axiale Auflösungsvermögen der optischen Kohärenztomografie erhöht werden, da der minimale Abstand von zwei in axialer z-Richtung auflösbarer Punkte proportional zum Quadrat der Wellenlänge verhält, d. h. es gilt Δz ∝ λ².

Alternativ kann die Wellenlänge der zweiten Strahlung beispielsweise derart gewählt sein, dass sie größer als die Wellenlänge der ersten Strahlung ist. Bevorzugt kann die Wellenlänge der zweiten Strahlung größer als 500 nm sein. Dadurch kann vorteilhaft in vielen Fällen eine unerwünschte Absorption der zweiten Strahlung im Ausgangsmaterial vermieden werden, da typischerweise genutzte Photoinitiatoren bei einer Wellenlänge zwischen 350 nm und 500 nm zerfallen. Die Wellenlänge der zweiten Strahlung kann beispielsweise zwischen 750 nm und 1400 nm, bevorzugt zwischen 750 nm und 920 nm, weiter bevorzugt zwischen 780 nm und 920 nm, liegen, oder aber auch zwischen 900 nm und 1100 nm betragen. Weiter bevorzugt sollte die zweite Strahlungsquelle keine gepulste Strahlungsquelle und folglich die zweite Strahlung keine gepulste Strahlung sein, um ein unbeabsichtigtes Auslösen eine Nichtlineare-Absorptions-Polymerisation zu vermeiden. Die zweite Strahlungsquelle kann beispielsweise als durchstimmbarer Laser oder breitbandige Strahlungsquelle, z. B. als Superlumineszenzdiode, ausgebildet sein. Die hohe spektrale Bandbreite dieser Strahlungsquellen ermöglicht eine große axiale Auflösung bei der Durchführung der optischen Kohärenztomografie.

Die erste Strahlungsquelle und die zweite Strahlungsquelle sind derart angeordnet, dass ein optisches System zumindest teilweise gemeinsam von der ersten Strahlung und der zweiten Strahlung nutzbar ist. Mit dem Begriff "optisches System" wird dabei die Gesamtheit von optischen Elementen, z. B. Linsen, Spiegel etc., in ihrer spezifischen Anordnung bezeichnet. Wird das optische System zumindest teilweise gemeinsam von der ersten Strahlung und der zweiten Strahlung genutzt, bedeutet dies, dass die optischen Elemente des optischen Systems sowohl von der ersten Strahlung als auch von der zweiten Strahlung passiert werden können. Hierbei können der erste Strahlengang der ersten Strahlung und der zweite Strahlengang der zweiten Strahlung identisch sein oder voneinander verschieden ausgebildet sein, indem z. B. Einfallswinkel unterschiedlich gewählt sind oder werden.

Des Weiteren weist die weitere Vorrichtung ein im optischen System angeordnetes Objektiv auf, das zur Fokussierung der ersten und zweiten Strahlung auf einen Fokuspunkt ausgebildet ist. Mit anderen Worten werden sowohl die erste Strahlung als auch die zweite Strahlung mit demselben Objektiv auf das Ausgangsmaterial bzw. den zu analysierenden Ort fokussiert.

Das optische System kann derart ausgebildet und angeordnet sein, dass ausschließlich die erste Strahlung oder ausschließlich die zweite Strahlung mittels des Objektivs auf einen Fokuspunkt fokussierbar ist. Alternativ kann das optische System derart ausgebildet und angeordnet sein, dass sowohl die erste Strahlung als auch die zweite Strahlung mittels des Objektivs auf einen Fokuspunkt fokussierbar sind. Der Fokuspunkt kann dabei ein gemeinsamer Fokuspunkt sein oder es können unterschiedliche Fokuspunkte für die erste und zweite Strahlung vorgegeben sein oder werden. Bei unterschiedlichen Fokuspunkten können lateral verschiedene Positionen und/oder in der Tiefe verschiedene Positionen vorgegeben sein oder werden. Dies wäre beispielsweise durch eine Neigung der optischen Achsen der Strahlengänge der ersten und zweiten Strahlung, realisiert beispielsweise durch einen verkippbaren Spiegel bzw. Scanspiegel oder durch einen Strahlteiler im Strahlengang der zweiten Strahlung, möglich. Hierdurch kann beispielsweise, wie bereits erwähnt, eine OCT-Analyse des fertig polymerisierten Ausgangsmaterials durchgeführt werden.

Entsprechend können im Fokuspunkt zu einem bestimmten Zeitpunkt entweder eine Nichtlineare-Absorptions-Polymerisation und/oder eine Analyse mittels optische Kohärenztomografie erfolgen. Der Fokuspunkt kann bewegt werden, indem beispielsweise im Strahlengang angeordnete Spiegel entsprechend bewegt werden. Das Objektiv kann als Immersionsobjektiv ausgebildet sein oder es kann derart angeordnet sein bzw. werden, dass das Objektiv in das Ausgangsmaterial eintaucht.

Zur Einkopplung der ersten Strahlung und/oder der zweiten Strahlung in das optische System verfügt die weitere Vorrichtung über ein Einkoppelelement.

Unter einem Einkoppelelement ist ein optisch wirksames Bauteil zu verstehen, mit dessen Hilfe die erste und/oder zweite Strahlung nach dem Aussenden durch die erste bzw. zweite Strahlungsquelle erstmals in das optische System gelangt bzw. welches die erste und/oder zweite Strahlung dem optischen System zuführt. Bei dem Einkoppelelement handelt es sich folglich nicht um ein weiteres optisch wirksames Element innerhalb des optischen Systems, das mit der ersten bzw. zweiten Strahlung in Wechselwirkung tritt, nachdem diese bereits in das optische System gelangt ist bzw. in das optische System eingekoppelt wurde. Das Einkoppelelement ist ausgewählt aus einer Gruppe bestehend aus einem mechanisch verstellbaren Spiegel, einem Galvospiegel, einem polarisierenden Strahlteiler, einem Intensitätsteiler und einem teilweise beschichteten Spiegel. Folglich ist das Einkoppelelement nicht als dichroitischer Spiegel ausgebildet. Es können auch mehrere der genannten Einkoppelelemente miteinander kombiniert werden.

Neben der Funktion des Einkoppelns der ersten und/oder zweiten Strahlung in das optische System kann das Einkoppelelement zudem auch als Auskoppelelement für die zweite Strahlung wirken. Dies bedeutet, dass die zweite Strahlung nach der Durchführung der OCT-Analyse, also nach Wechselwirkung mit der zu untersuchenden Probe und entsprechender Reflektion im Probenvolumen, mittels des Einkoppelelements wieder aus dem optischen System ausgekoppelt werden kann, z. B. durch Reflektion in Richtung einer OCT-Analyseeinheit.

Sowohl ein mechanisch verstellbarer Spiegel als auch ein Galvospiegel ermöglichen durch Bewegung zwischen zwei Positionen, dass abwechselnd entweder die erste Strahlung oder die zweite Strahlung in das optische System eingekoppelt wird, indem eine die erste bzw. zweite Strahlung reflektierende Fläche entsprechend ausgerichtet wird. Die Ausrichtung erfolgt bei einem mechanisch verstellbaren Spiegel ausschließlich mechanisch, während bei einem Galvospiegel die Ausrichtung mittels eines Galvanometerantriebs erfolgt.

Sowohl ein mechanisch verstellbarer Spiegel als auch ein Galvospiegel haben den Vorteil, dass jeweils nur eine der beiden Strahlungen in das optische System eingekoppelt wird und Wechselwirkungen der beiden Strahlungen untereinander oder Störungen der OCT-Analyse durch die erste Strahlung vermieden werden können. Zudem kann die Anzahl und Dauer der OCT-Analyse flexibel an die Geometrie des zu druckenden Bauteils und/oder die Qualitätserfordernisse angepasst werden. So kann es bei einfachen Geometrien nicht unbedingt notwendig sein, jede gedruckte Schicht mittels optischer Kohärenztomografie zu analysieren, sondern der zeitliche Abstand zwischen zwei OCT-Analysen kann größer gewählt werden. Dies kann sich positiv auf den Zeitaufwand zur Herstellung des Bauteils auswirken. Zudem kann der Rechenaufwand verringert werden, da weniger OCT-Analysedaten gewonnen werden. Entsprechend können eine geringere Rechenleistung in einer OCT-Analyseeinheit und/oder eine geringere Speichergröße in einer Speichereinheit ausreichend sein. Eine sequentielle Durchführung der Nichtlineare-Absorptions-Polymerisation und der OCT-Analyse kann auch in Anwendungsfällen von Vorteil sein, in denen der Polymerisationsprozess einige Zeit in Anspruch nimmt, so dass der Fokuspunkt der ersten Strahlung und somit auch der zweiten Strahlung aufgrund der hohen Schreibgeschwindigkeit zum Zeitpunkt der vollständigen Polymerisation bereits weit entfernt ist. In einem solchen Fall kann die Nichtlineare-Absorptions-Polymerisation gezielt für eine OCT-Analyse unterbrochen werden oder eine OCT-Analyse kann nach Abschluss des Schreibprozesses durchgeführt werden, so dass das gedruckte Ausgangsmaterial nach dessen vollständiger Polymerisation mittels optischer Kohärenztomografie analysiert werden kann.

Ein polarisierender Strahlteiler, ein Intensitätsteiler und ein teilweise beschichteter Spiegel ermöglichen eine gleichzeitige Einkopplung der ersten und zweiten Strahlung in das optische System. Folglich können OCT-Analyse und Nichtlineare-Absorptions-Polymerisation zeitgleich durchgeführt werden. Dies hat den Vorteil, dass bei der Polymerisation auftretende Fehler, z. B. durch Proximity-Effekte, frühzeitig erkannt werden und entsprechende Maßnahmen, z. B. ein Stopp des fehlerhaften Druckvorgangs, eingeleitet werden können.

Die Wirkweise eines polarisierenden Strahlteilers beruht auf der Verwendung von unterschiedlich linear polarisierter Strahlung für die erste und zweite Strahlung. Während beispielsweise Strahlung mit einem ersten Polarisationszustand transmittiert wird, wird Strahlung mit einem zweiten Polarisationszustand reflektiert.

Unter einem Intensitätsteiler ist ein Strahlteiler mit einer homogenen optisch wirksamen Beschichtung mit einem festen Transmissions/Reflexionsverhältnis von z. B. 80 % Transmission / 20 % Reflexion, bezogen auf die Wellenlänge der ersten oder zweiten Strahlung, zu verstehen. Folglich können beispielsweise 80 % der ersten Strahlung transmittiert werden, während 20 % der ersten Strahlung reflektiert werden. Entsprechend können 20 % der zweiten Strahlung transmittiert werden, während 80 % der zweiten Strahlung reflektiert werden.

Demgegenüber weist ein teilweise beschichteter Spiegel keine homogene optisch wirksame Beschichtung, sondern eine bereichsweise unterschiedlich optisch wirksame Beschichtung auf. Beispielsweise kann ein zentraler Bereich des teilweise beschichteten Spiegels eine Beschichtung mit einem Reflexionsgrad von 100 %, bezogen auf die Wellenlänge der ersten und zweiten Strahlung, aufweisen, während der Reflexionsgrad im Randbereich nahezu 0 % beträgt, die Beschichtung also nahezu 100 % transmissiv ist. Eine Strahlteilung kann dadurch erreicht werden, dass z. B. die zweite Strahlung ein Strahlenbündel mit einem geringeren Durchmesser als das Strahlenbündel der ersten Strahlung aufweist, so dass die zweite Strahlung nur im zentralen Bereich auf den teilweise beschichteten Spiegel auftrifft und dort zu nahezu 100 % reflektiert wird. Die erste Strahlung trifft demgegenüber auch in den Randbereichen auf den teilweise beschichteten Spiegel auf und kann entsprechend transmittiert werden. Mit anderen Worten kann die Beschichtung die erste Strahlung durch Zentralabschattung mit geringer Auswirkung auf die Spotform blocken und die zweite Strahlung vollständig einspiegeln.

Die Verwendung eines polarisierenden Strahlteilers, eines Intensitätsteilers oder eines teilweise beschichteten Spiegels hat den Vorteil, dass das Einkoppelelement starr ist und ein mechanischer Verschleiß daher nicht zu erwarten ist. Zudem können die OCT-Analyse und die Nichtlineare-Absorptions-Polymerisation zeitgleich durchgeführt werden.

Alle genannten Varianten des Einkoppelelements haben im Unterschied zu einen dichroitischen Spiegel als Einkoppelelement den Vorteil, dass für die erste Strahlung und die zweite Strahlung nah beieinander liegende Wellenlängen genutzt werden können. Dies wiederum erleichtert die Auswahl der übrigen optischen Elemente des optischen Systems, die für beide Wellenlängen geeignet sein müssen.

Mittels der vorgeschlagenen 3D-Druckvorrichtung kann vorteilhaft während einer Nichtlinearen-Absorptions-Polymerisation eine Analyse mittels optischer Kohärenztomografie in-situ und in Echtzeit durchgeführt werden.

Im optischen System können weitere optische Elemente angeordnet sein, die bildformend sein können und entlang einer optischen Achse angeordnet sind. Beispiele für optische Elemente sind u. a. Linsen und Spiegel.

Weiterhin kann die 3D-Druckvorrichtung unter anderem Folgendes aufweisen:
- eine Positionier- und Halteeinheit zum Positionieren und Halten des Ausgangsmaterials sowie ggf. des Substrats,
- eine Steuereinheit, eingerichtet und ausgebildet zur Steuerung der ersten und zweiten Strahlungsquelle, zur Steuerung von im optischen System angeordneter optischer Elemente, um eine Veränderung des Fokuspunkts der ersten Strahlung und des Fokuspunkts der zweiten Strahlung bewirken zu können, sowie zur Steuerung eines als mechanisch verstellbarer Spiegel oder Galvospiegel ausgebildeten Einkoppelelements, um zwischen erster und zweiter Strahlung umzuschalten,
- eine Analyseeinheit, eingerichtet und ausgebildet zur Generierung von OCT-Bildaufnahmen basierend auf der zweiten Strahlung,
- eine Speichereinheit, eingerichtet und ausgebildet zur Speicherung von OCT-Bildaufnahmen und/oder zur Speicherung von CAD-Modellen des zu fertigenden Werkstücks, und/oder
- eine Auswerteeinheit, eingerichtet und ausgebildet zum Erstellen von 3D-OCT-Scans aus mehreren OCT-Bildaufnahmen.

Gemäß verschiedenen Ausführungsvarianten kann die Vorrichtung eine Analyseeinheit aufweisen, die zur Generierung von Bildaufnahmen der optischen Kohärenztomografie basierend auf der zweiten Strahlung eingerichtet und ausgebildet ist. Die Analyseeinheit weist dabei mehrere Messkanäle derart auf, dass mehrere Analyseorte gleichzeitig mittels optischer Kohärenztomografie analysiert werden können.

Jeder Messkanal verfügt dabei jeweils über eine Strahlungsquelle oder eine Strahlungsquellenposition und einen Fokuspunkt. Strahlungsquellenposition bedeutet, dass die Strahlung einer physischen Strahlungsquelle räumlich derart aufgeteilt wird, dass jedem Messkanal Strahlung an einer bestimmten Position bereitgestellt wird. Beispielsweise kann die Vorrichtung eine Einrichtung, z. B. einen photonischen Chip, aufweisen, die dazu ausgebildet ist, die zweite Strahlung der zweiten Strahlungsquelle auf mehrere Messkanäle, z. B. sechs Messkanäle, aufzuteilen. Mittels der verschiedenen Messkanäle kann die zweite Strahlung an unterschiedlichen lateralen und/oder axialen Positionen bereitgestellt sein bzw. werden und auf unterschiedliche Analyseorte gelenkt sein bzw. werden. Jeder Messkanal kann folglich jeweils einen anderen Fokuspunkt erzeugen. Für die zurückkommende Strahlung nach Wechselwirkung mit der zu analysierenden Probe dient der jeweilige Messkanal als Detektionskanal.

Das Vorsehen mehrerer Messkanäle hat den Vorteil, dass mehrere Analyseorte, z. B. Probenbereiche, zeitgleich analysiert werden können, beispielsweise ein Analyseort mit noch nicht polymerisiertem Ausgangsmaterial, ein Analyseort mit teilweise polymerisiertem Ausgangsmaterial und ein Analyseort mit vollständig polymerisiertem Ausgangsmaterial. Hierdurch können Informationen über die zeitliche Reihenfolge von Vorgängen gewonnen werden. Zudem kann die Analysedauer verkürzt werden. Außerdem können die mehreren Messkanäle bei OCT-Analysen mit hoher numerischer Apertur und damit eingeschränkter A-Scan-Tiefe die gleichzeitige Aufnahme unterschiedlicher Tiefenbereiche ermöglichen.

Gemäß weiteren Ausführungsvarianten kann die zweite Strahlungsquelle eine zeitlich konstante, also nicht gepulste, Welle als zweite Strahlung aussenden.

Dadurch kann vorteilhaft eine unerwünschte Polymerisation des Ausgangsmaterials während der Analyse mittels optischer Kohärenztomografie vermieden werden. Als zweite Strahlungsquelle können beispielsweise ausreichend schwache Dauerstrichlichtquellen verwendet werden, die die Photoinitiatoren im Ausgangsmaterial nicht durch Ein-Photonen-Absorption anregen, wie z. B. eine Kombination aus mehreren superlumineszenten Leuchtdioden, die außerdem vorteilhaft eine große spektrale Bandbreite und damit eine axiale Auflösung von nur wenigen µm erreichen.

Gemäß weiteren Ausführungsvarianten kann die Vorrichtung ein Behältnis zur Anordnung eines zu polymerisierenden Ausgangsmaterials aufweisen, wobei das Behältnis zumindest teilweise transparent für die erste Strahlung und/oder zweite Strahlung ausgebildet ist.

Transparent bedeutet, dass die erste Strahlung und/oder zweite Strahlung zumindest teilweise durch eine Wandung des Behältnisses hindurchgelassen werden können und auf diese Weise den vom Behältnis umschlossenen Innenraum, in dem das zu polymerisierende Ausgangsmaterial angeordnet sein kann, erreichen kann. Beispielsweise kann vorgesehen sein, dass mehr als 70 % oder mehr als 80 % oder mehr als 90 % oder mehr als 95 % der ersten Strahlung und/oder zweiten Strahlung durch die Wandung des Behältnisses hindurchgelassen werden. Das Behältnis kann beispielsweise als Küvette ausgebildet sein.

Das zumindest teilweise transparente Behältnis ermöglicht es, ein in dem Behältnis angeordnetes Ausgangsmaterial durch die Wandung des Behältnisses hindurch auf einfache und bequeme Weise zu polymerisieren und/oder zu analysieren. Dies kann zu einer Vereinfachung des konstruktiven Aufbaus der Vorrichtung beitragen, da die erste bzw. zweite Strahlung nicht zwingend durch eine Öffnung im Behältnis zum Ausgangsmaterial gelangen muss.

Optional kann das Behältnis dicht verschlossen oder dicht verschließbar ausgebildet sein. Dies bietet die Möglichkeit, Ausgangsmaterialien zu polymerisieren und/oder zu analysieren werden, die gegenüber Umwelteinflüssen, z. B. Sauerstoff, Feuchtigkeit etc., empfindlich sind.

Gemäß weiteren Ausführungsvarianten kann ein Objektiv der Vorrichtung derart ausgebildet und angeordnet sein dass es in ein zu polymerisierendes Ausgangsmaterial eingetaucht werden kann.

Dies hat den Vorteil, dass für die Anordnung des Ausgangsmaterials ein Behältnis gewählt werden kann, welches für die erste und/oder zweite Strahlung nicht transparent ist.

Ein weiterer Aspekt der Erfindung betrifft ein 3D-Druckverfahren zur Fertigung eines Werkstücks mittels einer der vorstehend erläuterten Vorrichtungen. Das Verfahren sieht vor, dass die Nichtlineare-Absorptions-Polymerisation und die optischen Kohärenztomografie einander abwechselnd oder gleichzeitig, also zum selben Zeitpunkt, durchgeführt werden.

Die obigen Ausführungen zur Erläuterung der 3D-Druckvorrichtungendienen auch zur Beschreibung des erfindungsgemäßen Verfahrens. Mit dem erfindungsgemäßen Verfahren sind die Vorteile einer solchen 3D-Druckvorrichtung entsprechend verbunden.

Weitere, nicht beanspruchte, Aspekte der Offenbarung betreffen verschiedene Verfahren, bei denen die optische Kohärenztomografie in Zusammenhang mit der Nichtlinearen-Absorptions-Polymerisation genutzt wird. Die Verfahren können mittels der vorstehend beschriebenen 3D-Druckvorrichtungen ausgeführt werden. Es wird jedoch darauf hingewiesen, dass die nachstehend erläuterten Verfahren auch unabhängig von den vorstehend beschriebenen 3D-Druckvorrichtungen, ausgeführt werden können, beispielsweise mit 3D-Druckvorrichtungen, die Nichtlineare-Absorptions-Polymerisation und optische Kohärenztomografie anderweitig miteinander kombinieren, oder Vorrichtungen, die Nichtlineare-Absorptions-Polymerisation und optische Kohärenztomografie unabhängig voneinander realisieren.

Ein erstes Verfahren betrifft die Analyse einer Qualität eines Ausgangsmaterials der Nichtlinearen-Absorptions-Polymerisation mittels optischer Kohärenztomografie, wobei ein Qualitätsparameter des Ausgangsmaterials mittels optischer Kohärenztomografie ermittelt wird. Das Verfahren kann mittels einer der vorstehend erläuterten 3D-Druckvorrichtungen ausgeführt werden. Bevorzugt kann die optische Kohärenztomografie dreidimensional erfolgen.

Optional können Parameter der Nichtlinearen-Absorptions-Polymerisation unter Berücksichtigung des ermittelten Qualitätsparameters festgelegt werden. Beispielhafte Parameter hierfür sind u. a. die (Laser)leistung der für die Nichtlineare-Absorptions-Polymerisation verwendeten Strahlung, also z. B. der ersten Strahlungsquelle bzw. ersten Strahlung, die Trajektorie, also der Bewegungspfad entlang dessen der Fokuspunkt der für die Nichtlineare-Absorptions-Polymerisation verwendeten Strahlung über das Ausgangsmaterial geführt wird, und die Schreibdauer, beispielsweise das Geschwindigkeitsprofil mit dem die Trajektorie absolviert wird. Die derart festgelegten Parameter können anschließend zur Nichtlinearen-Absorptions-Polymerisation verwendet werden.

Beispielsweise können an Positionen, an denen eine Verunreinigung im Ausgangsmaterial festgestellt wurde, von Standardparametern abweichende Parameter für die Nichtlineare-Absorptions-Polymerisation verwendet werden, z. B. eine höhere Laserleistung, eine längere Schreibdauer etc. Die Trajektorie kann modifiziert werden, um überhaupt oder verbessert an Positionen einer Verunreinigung im Ausgangsmaterial schreiben zu können.

Dadurch kann die Qualität des mittels Nichtlinearer-Absorptions-Polymerisation zu fertigenden Werkstücks bei verunreinigtem Ausgangsmaterial verbessert werden.

Alternativ oder zusätzlich können auch Parameter der optischen Kohärenztomografie unter Berücksichtigung des ermittelten Qualitätsparameters festgelegt werden. Beispielhafte Parameter hierfür sind die Positionen der Fokuspunkte der für die optische Kohärenztomografie genutzten Strahlung sowie die Festlegung einer entsprechenden Trajektorie für den Fokuspunkt der für die optische Kohärenztomografie genutzten Strahlung. Die derart festgelegten Parameter können anschließend zur optischen Kohärenztomografie verwendet werden.

Beispielsweise können die Fokuspunkte der für die optische Kohärenztomografie genutzten Strahlung und damit die Analyseorte derart festgelegt werden, dass an Positionen, an denen eine Verunreinigung im Ausgangsmaterial festgestellt wurde, eine detailliertere Analyse im Vergleich zu Positionen ohne Verunreinigung erfolgen kann.

Dies kann eine verbesserte Analyse des zu fertigenden Werkstücks ermöglichen, so dass fehlerhafte Werkstücke frühzeitig, beispielsweise bereits während ihrer Fertigung, erkannt werden und ggf. Gegenmaßnahmen ergriffen werden können.

Ein weiteres Verfahren betrifft die Überprüfung der Position und/oder Ausrichtung eines mittels Nichtlinearer-Absorptions-Polymerisation zu bedruckenden Substrats, wobei charakteristische Merkmale des zu bedruckenden Substrats mittels optischer Kohärenztomografie identifiziert werden. Das Verfahren kann mittels einer der vorstehend erläuterten 3D-Druckvorrichtungen ausgeführt werden. Bevorzugt kann die optische Kohärenztomografie dreidimensional erfolgen.

Unter charakteristischen Merkmalen des zu bedruckenden Substrats sind Objekte, z. B. Markierungen, Begrenzungen, Verunreinigungen, auf der Oberfläche oder im Inneren des Substrats zu verstehen, die eindeutig lokalisierbar sind, d. h. deren Position bezüglich des Substrats bekannt ist, und anhand derer die Position und/oder Ausrichtung des Substrats bestimmt werden kann. Der Begriff "Position" beschreibt dabei die absolute Positionierung des Substrats bezüglich eines Bezugspunkts, z. B. in einem Koordinatensystem. Der Begriff "Ausrichtung" beschreibt die Drehposition des Substrats bezüglich eines Bezugspunkts, z. B. in einem Koordinatensystem, d. h. die Ausrichtung bestimmt beispielsweise, welche Kante eines würfelförmigen Substrats sich wo befindet.

Eine Identifizierung solch charakteristischer Merkmale mittels optischer Kohärenztomografie kann genutzt werden, um den Druckausrichtungsprozess zu unterstützen und eine möglichst genaue Positionierung und/oder Ausrichtung des zu bedruckenden Bereichs bezüglich des Fokuspunkts der für die Nichtlineare-Absorptions-Polymerisation genutzten Strahlung zu ermöglichen. Dadurch kann die Qualität der zu fertigenden Werkstücke verbessert werden, beispielsweise indem Abweichungen zwischen dem gefertigten Werkstück und der zugehörigen Vorlage verringert werden können.

Ein weiteres Verfahren betrifft die Ermittlung eines ortsaufgelösten Umwandlungsgrads einer Nichtlinearen-Absorptions-Polymerisation mittels optischer Kohärenztomografie. Das Verfahren kann mittels einer der vorstehend erläuterten 3D-Druckvorrichtungen ausgeführt werden. Bevorzugt kann die optische Kohärenztomografie dreidimensional erfolgen. Dies ermöglicht vorteilhaft eine dreidimensional aufgelöste Bestimmung des lokalen Umwandlungsgrads.

Optional können Parameter der Nichtlinearen-Absorptions-Polymerisation unter Berücksichtigung des ermittelten Umwandlungsgrads festgelegt werden. Beispielhafte Parameter hierfür sind auch hier u. a. die (Laser)leistung der für die Nichtlineare-Absorptions-Polymerisation verwendeten Strahlung, die Trajektorie und die Schreibdauer.

Beispielsweise können bei nicht ausreichendem Umwandlungsgrad von Standardparametern abweichende Parameter für die Nichtlineare-Absorptions-Polymerisation verwendet werden, z. B. eine höhere Laserleistung, eine längere Schreibdauer etc. Die Trajektorie kann modifiziert werden, um beispielsweise an Positionen mit zu geringem Umwandlungsgrad eine erneute oder verlängerte Bestrahlung zu bewirken. Es besteht auch die Möglichkeit, die Trajektorie derart festzulegen, dass Positionen, an denen die Polymerisation noch nicht vollständig stattgefunden hat, d. h. der Umwandlungsgrad zu gering ist, beim Schreiben der nachfolgenden Schicht während des schichtweisen Aufbaus des zu fertigenden Werkstücks (zunächst) zu überspringen, beispielsweise um unerwünschte Polymerisationsvorgänge zu vermeiden. Die derart festgelegten Parameter können anschließend zur Nichtlinearen-Absorptions-Polymerisation verwendet werden.

Alternativ oder zusätzlich können auch Parameter der optischen Kohärenztomografie unter Berücksichtigung unter Berücksichtigung des ermittelten Umwandlungsgrads festgelegt werden. Beispielhafte Parameter hierfür sind die Positionen der Fokuspunkte der für die optische Kohärenztomografie genutzten Strahlung sowie die Festlegung einer entsprechenden Trajektorie für den Fokuspunkt der für die optische Kohärenztomografie genutzten Strahlung. Die derart festgelegten Parameter können anschließend zur optischen Kohärenztomografie verwendet werden.

Beispielsweise können die Fokuspunkte der für die optische Kohärenztomografie genutzten Strahlung und damit die Analyseorte derart festgelegt werden, dass an Positionen, an denen ein zu geringer Umwandlungsgrad festgestellt wurde, eine detailliertere Analyse im Vergleich zu Positionen mit ausreichendem Umwandlungsgrad erfolgen kann.

Dies kann eine verbesserte Analyse des zu fertigenden Werkstücks ermöglichen, so dass fehlerhafte Werkstücke frühzeitig, beispielsweise bereits während ihrer Fertigung, erkannt werden und ggf. Gegenmaßnahmen ergriffen werden können.

Dadurch besteht die Möglichkeit, den Umwandlungsgrad und zusammen mit diesem die vom Umwandlungsgrad abhängigen Eigenschaften des gefertigten Werkstücks lokal aufgelöst zu beeinflussen.

Ein weiteres Verfahren betrifft die Analyse der Strukturschärfe einer durch Nichtlineare-Absorptions-Polymerisation erzeugten Struktur. Hierfür wird die Strukturschärfe anhand eines mittels optischer Kohärenztomografie ortsaufgelöst ermittelten Brechungsindexverlaufs ermittelt, optional in-situ. Das Verfahren kann mittels einer der vorstehend erläuterten 3D-Druckvorrichtungen ausgeführt werden. Bevorzugt kann die optische Kohärenztomografie dreidimensional erfolgen.

Optional können Parameter der Nichtlinearen-Absorptions-Polymerisation unter Berücksichtigung der ermittelten Strukturschärfe festgelegt werden. Beispielhafte Parameter hierfür sind auch hier u. a. die (Laser)leistung der für die Nichtlineare-Absorptions-Polymerisation verwendeten Strahlung, die Trajektorie und die Schreibdauer. Beispielsweise können bei nicht ausreichender Strukturschärfe von Standardparametern abweichende Parameter für die Nichtlineare-Absorptions-Polymerisation verwendet werden, z. B. eine höhere Laserleistung, eine längere Schreibdauer etc. Die Trajektorie kann modifiziert werden, um beispielsweise an Positionen mit zu geringer Strukturschärfe eine erneute oder verlängerte Bestrahlung zu bewirken. Die derart festgelegten Parameter können anschließend zur Nichtlinearen-Absorptions-Polymerisation verwendet werden.

Alternativ oder zusätzlich können auch Parameter der optischen Kohärenztomografie unter Berücksichtigung unter Berücksichtigung der ermittelten Strukturschärfe festgelegt werden. Beispielhafte Parameter hierfür sind die Positionen der Fokuspunkte der für die optische Kohärenztomografie genutzten Strahlung sowie die Festlegung einer entsprechenden Trajektorie für den Fokuspunkt der für die optische Kohärenztomografie genutzten Strahlung. Die derart festgelegten Parameter können anschließend zur optischen Kohärenztomografie verwendet werden.

Beispielsweise können die Fokuspunkte der für die optische Kohärenztomografie genutzten Strahlung und damit die Analyseorte derart festgelegt werden, dass an Positionen, an denen eine zu geringe Strukturschärfe festgestellt wurde, eine detailliertere Analyse im Vergleich zu Positionen mit ausreichender Strukturschärfe erfolgen kann.

Dies kann eine verbesserte Analyse des zu fertigenden Werkstücks ermöglichen, so dass fehlerhafte Werkstücke frühzeitig, beispielsweise bereits während ihrer Fertigung, erkannt werden und ggf. Gegenmaßnahmen ergriffen werden können.

Dadurch besteht die Möglichkeit, die Strukturschärfe und zusammen mit dieser die von der Strukturschärfe abhängigen Eigenschaften des gefertigten Werkstücks lokal aufgelöst zu beeinflussen.

Beispielsweise können der Umwandlungsgrad und/oder die Strukturschärfe in situ während der Nichtlinearen-Absorptions-Polymerisation ermittelt werden. Parameter der Nichtlinearen-Absorptions-Polymerisation, z. B. Laserleistung, Schreibdauer, können anschließend in Abhängigkeit des ermittelten Umwandlungsgrads und/oder der ermittelten Strukturschärfe z. B. unter Berücksichtigung von geometrischen Deformationen und/oder einem von einer Zielfunktion abweichenden Umwandlungsgrad, geregelt werden. Nicht ausreichend polymerisierte Bereiche können, z. B. durch Änderung der Trajektorie des Fokuspunkts der für die Nichtlineare-Absorptions-Polymerisation genutzten Strahlung, erneut bestrahlt werden, um beispielsweise den Umwandlungsgrad weiter zu erhöhen, den Brechungsindex und/oder den E-Modul zu ändern. Es kann ein geschlossener Regelkreis auf Basis der OCT-Daten ausgebildet werden.

Alternativ oder zusätzlich können auch Parameter der optischen Kohärenztomografie in Abhängigkeit des ermittelten Umwandlungsgrads und/oder der ermittelten Strukturschärfe, beispielsweise gemäß den vorstehend erläuterten Prinzipien, geregelt werden.

Ein weiteres Verfahren betrifft die dreidimensionale Rekonstruktion eines mittels Nichtlinearer-Absorptions-Polymerisation gefertigten Werkstücks, wobei sich während der Fertigung des Werkstücks Sequenzen, in denen mittels Nichtlinearer-Absorptions-Polymerisation gedruckt wird, und Sequenzen, in denen eine Analyse mittels optischer Kohärenztomografie erfolgt, einander abwechseln. Das Verfahren kann mittels einer der vorstehend erläuterten 3D-Druckvorrichtungen ausgeführt werden. Bevorzugt kann die optische Kohärenztomografie dreidimensional erfolgen.

Optional kann eine Anzahl und/oder ein Zeitpunkt der Sequenzen, in denen eine Analyse mittels optischer Kohärenztomografie erfolgt, in Abhängigkeit einer erwarteten Morphologie des gefertigten Werkstücks, eines Ausgangsmaterials des gefertigten Werkstücks und/oder Parametern der Nichtlinearen-Absorptions-Polymerisation festgelegt werden. Die Parameter der Nichtlinearen-Absorptions-Polymerisation können dabei ausgewühlt sein aus einer Gruppe umfassend: Laserleistung der für die Nichtlineare-Absorptions-Polymerisation verwendeten Strahlung, Trajektorie und Schreibdauer. Dadurch kann einerseits das gedruckte Werkstück genau rekonstruiert und andererseits der erforderliche Zeitaufwand gering gehalten werden.

Die Erfindung wird nachfolgend anhand der Abbildungen und der zugehörigen Beschreibung näher erläutert. Es zeigen:
- Fig. 1: eine schematische Darstellung einer 3D-Druckvorrichtung gemäß eines ersten Ausführungsbeispiels;
- Fig. 2: eine schematische Darstellung einer 3D-Druckvorrichtung gemäß eines dritten Ausführungsbeispiels;
- Fig. 3: eine schematische Darstellung einer 3D-Druckvorrichtung gemäß eines vierten Ausführungsbeispiels;
- Fig. 4a, b: beispielhafte Ablaufschemata für 3D-Druckverfahren zur Fertigung eines Werkstücks;
- Fig. 5: eine Abbildung zur Erläuterung eines beispielhaften Verfahrens zur Analyse einer Qualität eines Ausgangsmaterials der Nichtlinearen-Absorptions-Polymerisation;
- Fig. 6a, b: Abbildungen zur Erläuterung eines beispielhaften Verfahrens zur Ermittlung eines Umwandlungsgrads bei einer Nichtlinearen-Absorptions-Polymerisation;
- Fig. 7a, b: Abbildungen zur Erläuterung eines beispielhaften Verfahrens Analyse einer Strukturschärfe von durch Nichtlineare-Absorptions-Polymerisation erzeugten Strukturen;
- Fig. 8a, b: Abbildungen zur Erläuterung eines beispielhaften Verfahrens zur dreidimensionalen Rekonstruktion eines mittels Nichtlinearer-Absorptions-Polymerisation gefertigten Werkstücks; und
- Fig. 9: eine Abbildung zur Erläuterung eines beispielhaften Verfahrens zur Überprüfung der Ausrichtung eines mittels Nichtlinearer-Absorptions-Polymerisation zu bedruckenden Substrats.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung gemäß den Ansprüchen abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren werden identische oder ähnliche Elemente mit identischen Bezugszeichen versehen, soweit dies zweckmäßig ist.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, die die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.

Ausdrücklich wird darauf hingewiesen, dass der Einfachheit halber und zum einfacheren Verständnis der angegebenen und beanspruchten Bauteile diese zumeist als Einzelbauteile benannt sind. Je nach den individuell vorliegenden Gegebenheiten können für die gleiche Funktion auch mehrere entsprechende Bauteile hintereinander oder parallel verwendet werden. Auch solche mehrteiligen Anordnungen sollen von den Ansprüchen und der Beschreibung ausdrücklich mit umfasst sein.

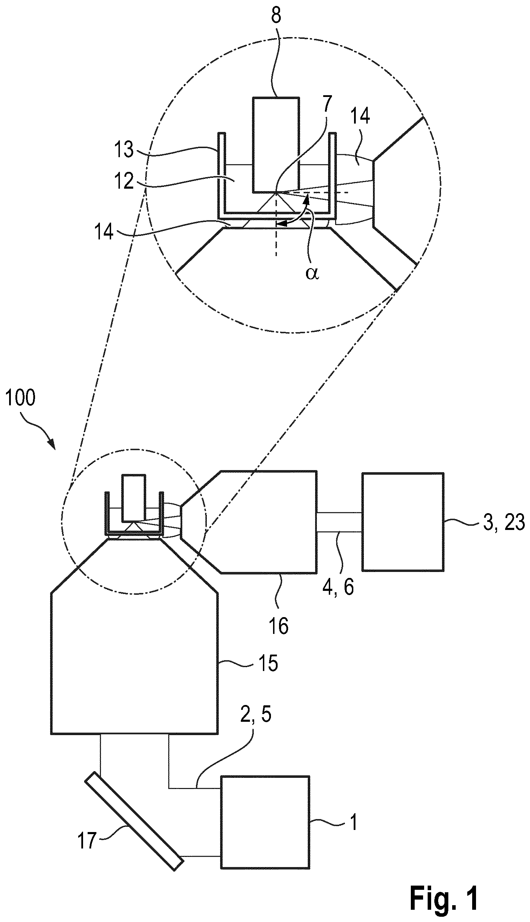

In Fig. 1 ist ein erstes Ausführungsbeispiel einer 3D-Druckvorrichtung 100 zur Fertigung eines Werkstücks schematisch dargestellt. Der eingekreiste Bereich ist vergrößert dargestellt.

Die Vorrichtung 100 weist eine erste Strahlungsquelle 1 auf, die eine erste Strahlung 2 aussendet. Mittels der ersten Strahlung 2 kann eine Nichtlineare-Absorptions-Polymerisation, z. B. eine Zwei-Photonen-Polymerisation, durchgeführt werden. Hierzu wird die erste Strahlung 1 entlang eines ersten Strahlengangs 5 geführt, bis sie am Fokuspunkt 7 auf das zu polymerisierende flüssige Ausgangsmaterial 12, welches in einem als transparente Küvette ausgebildeten Behältnis 13 angeordnet ist, auftrifft. Die erste Strahlungsquelle 1 ist im Ausführungsbeispiel als fs-Laserstrahlungsquelle ausgebildet, d. h. bei der ersten Strahlung 2 handelt es sich um fs-Laserstrahlung.

Zur Formung des ersten Strahlengangs 5 sind mehrere optische Elemente vorhanden, von denen in Fig. 1 aus Gründen der Übersichtlichkeit lediglich der Spiegel 17 dargestellt ist. Des Weiteren ist im ersten Strahlengang 5 ein erstes Objektiv 15 angeordnet, mit dem der Fokuspunkt 7 der ersten Strahlung 2 festgelegt werden kann. Das erste Objektiv 15 ist als Immersionsobjektiv ausgebildet, d. h. zwischen der Frontlinse des ersten Objektivs 15 und dem Behältnis 13 mit dem Ausgangsmaterial 12 ist eine Immersionsflüssigkeit 14 angeordnet. Hierdurch kann das Auflösungsvermögen verbessert werden und es können kleinere Strukturen mit höherer Genauigkeit gedruckt werden. Das erste Objektiv 15 weist im Ausführungsbeispiel eine numerische Apertur NA = 1,4 und eine Maßstabszahl 40x auf.

Des Weiteren weist die Vorrichtung 100 eine zweite Strahlungsquelle 3 auf, die eine zweite Strahlung 4 aussendet. Mittels der zweiten Strahlung 4 kann eine Analyse mittels optische Kohärenztomografie durchgeführt werden. Hierzu wird die zweite Strahlung 4 entlang eines zweiten Strahlengangs 6 geführt, bis sie am Fokuspunkt 7 auf die zu analysierende Probe, z. B. das zu polymerisierende flüssige Ausgangsmaterial 12, auftrifft. Die zweite Strahlungsquelle 3 ist im Ausführungsbeispiel als durchstimmbarer Laser oder als Superlumineszenzdiode ausgebildet. Der zweite Strahlengang 6 ist unabhängig vom ersten Strahlengang 5 ausgebildet.

Zur Formung des zweiten Strahlengangs 6 sind mehrere optische Elemente vorhanden, die in Fig. 1 aus Gründen der Übersichtlichkeit nicht näher dargestellt sind. Des Weiteren ist im zweiten Strahlengang 6 ein zweites Objektiv 16 angeordnet, mit dem der Fokuspunkt 7 der zweiten Strahlung 4 festgelegt werden kann. Der Fokuspunkt 7 der ersten Strahlung 2 kann dem Fokuspunkt 7 der zweiten Strahlung 4, wie in Fig. 1 dargestellt, entsprechen. Alternativ können die beiden Fokuspunkte 7 voneinander abweichen. Beispielsweise kann der Fokuspunkt 7 der zweiten Strahlung 4 unmittelbar vor oder unmittelbar hinter dem Fokuspunkt 7 der ersten Strahlung 2, bezogen auf eine Bewegung des Fokuspunkts7 der ersten Strahlung 2, liegen. Dies ermöglicht eine Analyse mittels OCT unmittelbar vor bzw. nach der Nichtlinearen-Absorptions-Polymerisation.

Das zweite Objektiv 16 ist ebenfalls als Immersionsobjektiv ausgebildet, d. h. zwischen der Frontlinse des zweiten Objektivs 16 und dem Behältnis 13 mit dem Ausgangsmaterial 12 ist eine Immersionsflüssigkeit 14 angeordnet. Hierdurch kann ein verbessertes Signal-Rausch-Verhältnis bei der optischen Kohärenztomografie erreicht werden, indem unerwünschte Rückreflektionen an der Oberfläche des Substrat 8 oder des Behältnisses 13 vermieden werden. Für die numerische Apertur NA des zweiten Objektivs 16 gilt NA < 0,25.

Optional können der erste Strahlengang 5 und/oder der zweite Strahlengang 6 fasergeführt ausgebildet sein.

Im ersten Ausführungsbeispiel sind der erste Strahlengang 5 und der zweite Strahlengang 6 derart ausgebildet, dass die erste Strahlung 2 und die zweite Strahlung 4 im Wesentlichen senkrecht zueinander auf den Fokuspunkt 7 treffen, d. h. für den Winkel α gilt α = 90° Weder die erste Strahlung 2 noch die zweite Strahlung 4 durchqueren auf ihrem Weg zum Fokuspunkt 7 das Substrat 8, so dass auch für die erste Strahlung 2 und die zweite Strahlung 4 nicht transparente Substrate 8 genutzt werden können. Wie in Fig. 1 ersichtlich, ist der Durchmesser des ersten Strahlengangs 5 deutlich größer als der Durchmesser des zweiten Strahlengangs 6.

Die Vorrichtung 100 weist zudem eine Analyseeinheit 23 auf, die in einem gemeinsamen Gehäuse mit der zweiten Strahlungsquelle 3 untergebracht ist und mit der anhand der zweiten Strahlung 4 eine OCT-Analyse am Fokuspunkt 7 vorgenommen werden kann. Mit anderen Worten generiert die Analyseeinheit 23 OCT-Bildaufnahmen basierend auf der zweiten Strahlung 4. Optional kann die Analyseeinheit 23 mehrere Messkanäle aufweisen, so dass mehrere Analyseorte gleichzeitig analysiert werden können.

Darüber hinaus kann die Vorrichtung 100 weitere Einheiten (nicht dargestellt), wie z. B. eine Steuereinheit, eine Speichereinheit, eine Auswerteeinheit, eine Positionier- und Halteeinheit, aufweisen.

In einem zweiten Ausführungsbeispiel (nicht dargestellt) gilt für den Winkel α α = 80°. Dieser Winkel α ergibt sich für einen objektseitigen Öffnungswinkel des zweiten Objektivs 16 von ω = 20° gemäß α = 90° - ω/2.

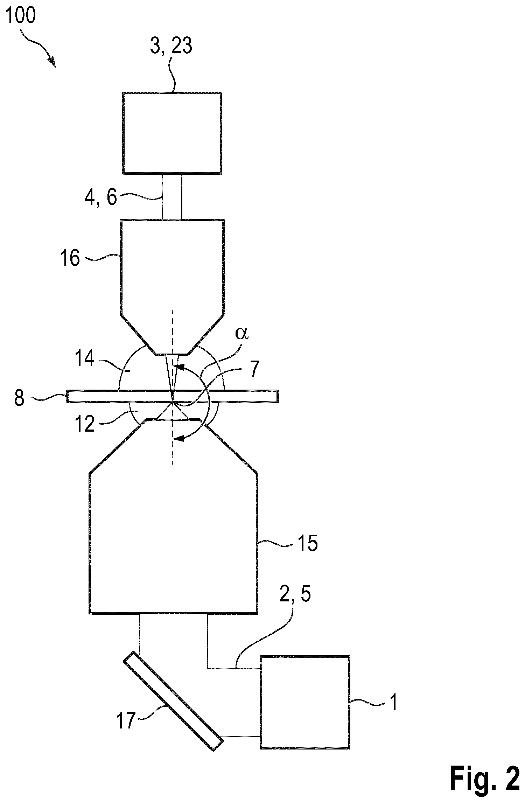

Fig. 2 zeigt ein drittes Ausführungsbeispiel einer 3D-Druckvorrichtung 100 zur Fertigung eines Werkstücks schematisch. Im Unterschied zum ersten und zweiten Ausführungsbeispiel trifft die zweite Strahlung 4 durch das Substrat 8 hindurch auf den Fokuspunkt 7 auf. Dies erfordert ein Substrat 8, dessen Material für die zweite Strahlung 4 transparent ist. Der Winkel α zwischen der ersten Strahlung 2 und der zweiten Strahlung 4 beträgt α = 180°.

Ein weiterer Unterschied zum ersten Ausführungsbeispiel besteht darin, dass das Ausgangsmaterial 12 nicht in einem Behältnis 13 angeordnet ist, sondern das erste Objektiv 15 direkt in das Ausgangsmaterial 12 eintaucht. Das erste Objektiv 15 ist daher auch nicht als Immersionsobjektiv ausgebildet. Im Übrigen wird auf die Erläuterungen zu Fig. 1 verwiesen.

Fig. 3 zeigt ein viertes Ausführungsbeispiel einer 3D-Druckvorrichtung 300 zur Fertigung eines Werkstücks.

Die Vorrichtung 300 weist eine erste Strahlungsquelle 1 auf, die eine erste Strahlung 2 aussendet. Mittels der ersten Strahlung 2 kann eine Nichtlineare-Absorptions-Polymerisation durchgeführt werden. Hierzu wird die erste Strahlung 1 im optischen System 9 entlang geführt, bis sie am Fokuspunkt 7 auf das zu polymerisierende flüssige Ausgangsmaterial 12 auftrifft. Die erste Strahlungsquelle 1 ist im Ausführungsbeispiel als fs-Laserstrahlungsquelle ausgebildet, d. h. bei der ersten Strahlung 2 handelt es sich um fs-Laserstrahlung. Optional kann die erste Strahlung 2 fasergeführt sein.

Das optische System 9 umfasst mehrere optische Elemente, von denen in Fig. 3 mehrere Linsen 19 dargestellt sind. Des Weiteren umfasst das optische System 9 ein Objektiv 18, mit dem der Fokuspunkt 7 der ersten Strahlung 2 festgelegt werden kann. Mittels des Galvospiegels 20 für die x-Richtung und des Galvospiegels 21 für die y-Richtung kann die Oberfläche der Probe abgerastert werden, beispielsweise gemäß einem vorgebbaren CAD-Modell des zu fertigenden Werkstücks. Das Objektiv 18 taucht direkt in das Ausgangsmaterial 12 ein. Das Objektiv 18 weist im Ausführungsbeispiel eine numerische Apertur NA = 1,4 und eine Maßstabszahl 40x auf.

Des Weiteren weist die Vorrichtung 300 eine zweite Strahlungsquelle 3 auf, die eine zweite Strahlung 4 aussendet. Mittels der zweiten Strahlung 4 kann eine Analyse mittels optische Kohärenztomografie durchgeführt werden. Hierzu wird die zweite Strahlung 4 ebenfalls im optischen System 9 geführt, bis sie am Fokuspunkt 7 auf die zu analysierende Probe, z. B. das zu polymerisierende flüssige Ausgangsmaterial 12, auftrifft. Die zweite Strahlungsquelle 3 ist im Ausführungsbeispiel als durchstimmbarer Laser oder als Superlumineszenzdiode ausgebildet, d. h. bei der zweiten Strahlung 4 handelt es sich um Laserstrahlung. Die zweite Strahlung 4 kann mittels einer optischen Single-Mode-Faser transportiert und über den Faserkoppler 22 in das optische System 9 eingekoppelt werden.

Die Vorrichtung 300 verfügt über ein Einkoppelelement 10 das im Ausführungsbeispiel als polarisierender Strahlteiler ausgebildet ist, alternativ jedoch auch als mechanisch verstellbarer Spiegel, Galvospiegel, Intensitätsteiler oder teilweise beschichteter Spiegel ausgebildet sein kann. Mittels des als polarisierender Strahlteiler ausgebildeten Einkoppelelements 10 können die erste Strahlung 2 und die zweite Strahlung 4 gleichzeitig in das optische System 9 eingekoppelt werden, um eine Nichtlineare-Absorptions-Polymerisation und eine Analyse mittels optischer Kohärenztomografie gleichzeitig durchführen zu können.

Mittels des Faserkopplers 22 kann der Durchmesser des Strahlenbündels der zweiten Strahlung 4 derart festgelegt werden, dass dieser beim Auftreffen auf das Einkoppelelement 10 geringer als der Durchmesser des Strahlenbündels der ersten Strahlung 2 ist. Durch die gezielte Einstellung des Durchmessers des Strahlenbündels der zweiten Strahlung 4 kann die Apertur des Objektivs 18 gezielt unterbeleuchtet werden, d. h. die effektive numerische Apertur NA des Objektivs 18 für die zweite Strahlung 4 kann gezielt reduziert werden

Die Vorrichtung 300 weist zudem eine Analyseeinheit 23 auf, die in einem gemeinsamen Gehäuse mit der zweiten Strahlungsquelle 3 untergebracht ist und mit der anhand der zweiten Strahlung 4 eine OCT-Analyse am Fokuspunkt 7 vorgenommen werden kann. Mit anderen Worten generiert die Analyseeinheit 23 OCT-Bildaufnahmen basierend auf der zweiten Strahlung 4. Optional kann die Analyseeinheit 23 mehrere Messkanäle aufweisen, so dass mehrere Analyseorte gleichzeitig analysiert werden können. Hierfür kann die zweite Strahlung 4 mittels eines photonischen Chips auf die einzelnen Messkanäle aufgeteilt werden.

Darüber hinaus kann die Vorrichtung 300 weitere Einheiten (nicht dargestellt), wie z. B. eine Steuereinheit, eine Speichereinheit, eine Auswerteeinheit, eine Positionier- und Halteeinheit, aufweisen.

Unter Bezugnahme auf die Fig. 4a und 4b werden nachfolgend beispielhafte 3D-Druckverfahren 200, 400 zur Fertigung eines Werkstücks näher erläutert. Fig. 4a zeigt ein Ablaufschema eines 3D-Druckverfahrens 200, bei dem die Nichtlineare-Absorptions-Polymerisation S3 und die optischen Kohärenztomografie S4 gleichzeitig durchgeführt werden. Das Verfahren 200 kann beispielsweise mittels einer der vorstehend unter Bezugnahme auf Fig. 1 oder Fig. 2 erläuterten 3D-Druckvorrichtungen durchgeführt werden.

Nach dem Start des Verfahrens 200 wird im Verfahrensschritt S1 ein Substrat bereitgestellt, auf das Material mittels Nichtlinearer-Absorptions-Polymerisation aufgebracht werden soll und welches zusammen mit dem aufgebrachten Material nach Beendigung des Verfahrens 200 das gefertigte Werkstück bildet.

Im Verfahrensschritt S2 wird das Substrat im Ausgangsmaterial positioniert. Als Ausgangsmaterial kann beispielsweise das Produkt IP Dip^{®}des Herstellers Nanoscribe GmbH verwendet werden. Alternativen zu diesem Ausgangsmaterial sind u. a. die Produkte: IP-S, IP-Q, IP-Visio, IP-n162, IP-L des Herstellers Nanoscribe GmbH, OrmoComb^{®} des Herstellers Micro resist technology Gesellschaft für chemische Materialien spezieller Photoresistsysteme mbH, upphoto, updraft, upbrix, upsol, upopto des Herstellers UpNano GmbH.

Das Ausgangsmaterial weist üblicherweise eine flüssige Konsistenz auf und kann in einem Behältnis, z. B. einer Küvette, einer Schale etc. vorliegen. Das Behältnis ist dabei transparent für die Strahlung ausgebildet, die zur Durchführung der Nichtlinearen-Absorptions-Polymerisation und zur Durchführung der optischen Kohärenztomografie genutzt wird. Zur Positionierung des Substrats wird dieses zumindest teilweise in das Ausgangsmaterial eingetaucht, so dass zumindest an der Grenzfläche zwischen Substrat und aufzubauendem Polymer Ausgangsmaterial vorhanden ist.

Im Verfahrensschritt S3 wird eine Nichtlineare-Absorptions-Polymerisation des Ausgangsmaterials durchgeführt. Zur genaueren Erläuterung dieses Verfahrensschritts S3 wird auf die obige Beschreibung der Nichtlinearen-Absorptions-Polymerisation verwiesen.

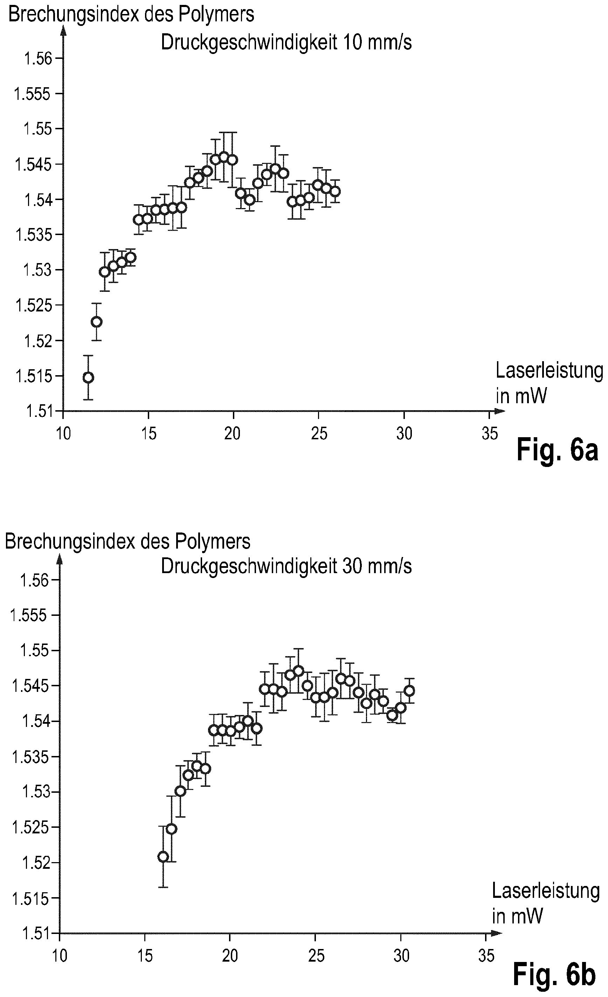

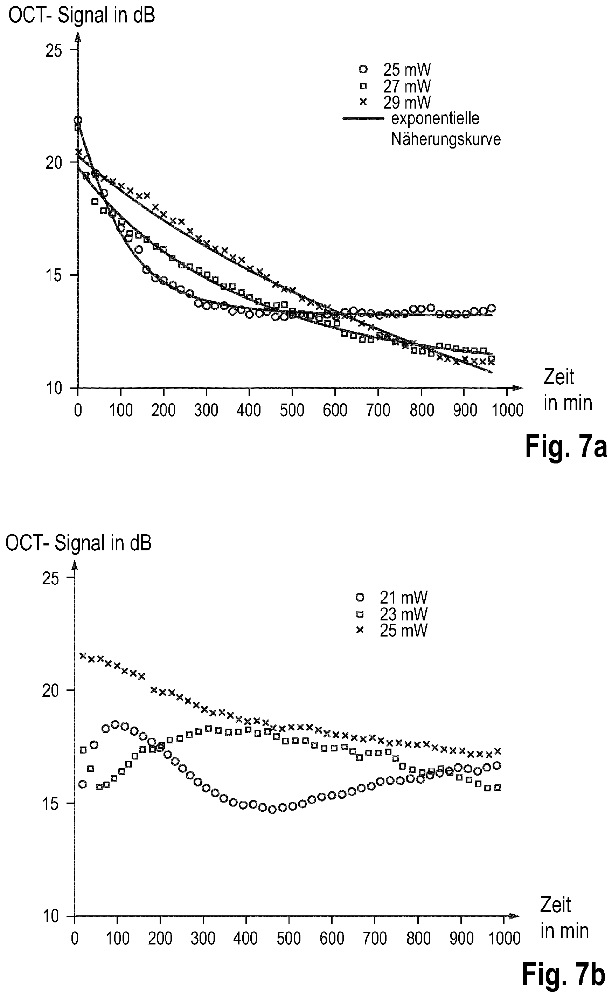

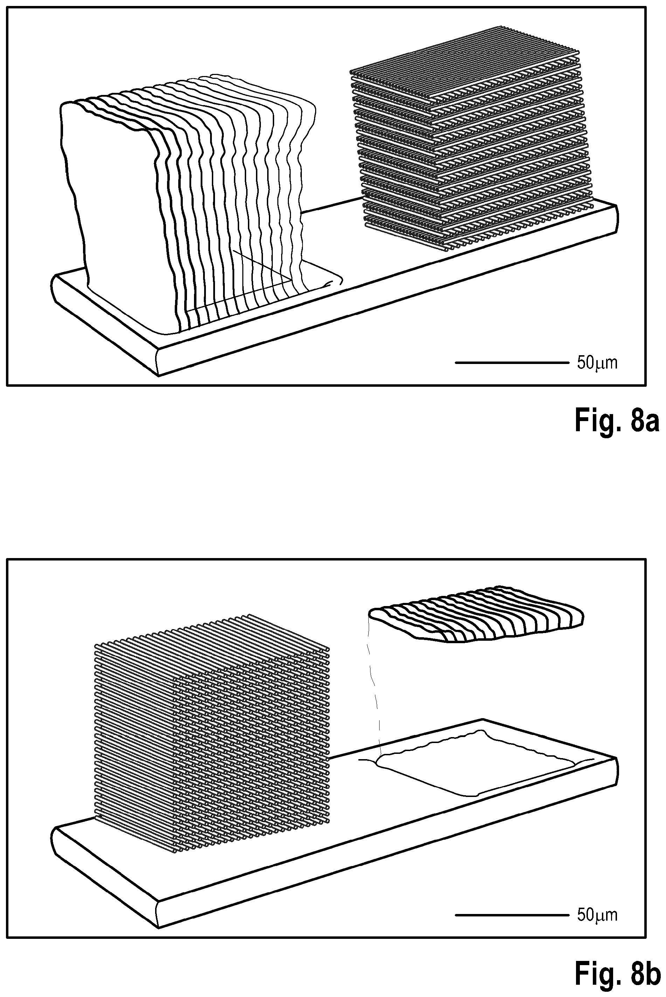

Zumindest teilweise zeitlich überlappend, also gleichzeitig, zum Verfahrensschritt S3 wird im Verfahrensschritt S4 eine optische Kohärenztomografie durchgeführt. Mittels der optischen Kohärenztomografie kann eine in-situ Analyse während des 3D-Drucks durchgeführt werden. Beispielsweise besteht die Möglichkeit, den Umwandlungsgrad der Nichtlinearen-Absorptions-Polymerisation ortsaufgelöst zu ermitteln, z. B. wie nachfolgend unter Bezugnahme auf Fig. 6a und Fig. 6b beschrieben. Alternativ oder zusätzlich kann die Strukturschärfe der durch die Nichtlineare-Absorptions-Polymerisation erzeugten Strukturen analysiert werden, z. B. wie nachfolgend unter Bezugnahme auf Fig. 7a, und Fig. 7b beschrieben. Alternativ oder zusätzlich kann das gefertigte Werkstück dreidimensional rekonstruiert werden, z. B. wie nachfolgend unter Bezugnahme auf Fig. 8 beschrieben.

Vor Beginn der Nichtlinearen-Absorptions-Polymerisation kann die optische Kohärenztomografie genutzt werden, um das zu bedruckende Substrat auszurichten, in dem charakteristische Punkte des zu bedruckenden Substrats identifiziert werden. Alternativ oder zusätzlich kann die Qualität des Ausgangsmaterials mittels optischer Kohärenztomografie analysiert werden, wie z. B. nachfolgend unter Bezugnahme auf Fig. 5 beschrieben.

Nachdem alle gewünschten Strukturen mittels Nichtlinearer-Absorptions-Polymerisation hergestellt worden sind, wird im Verfahrensschritt S5 überschüssiges Ausgangsmaterial mit einem geeigneten Lösungsmittel ausgewaschen, so dass das gefertigte Werkstück erhalten wird. Damit ist das Verfahren 200 beendet.

In Fig. 4b ist ein Ablaufschema eines weiteren beispielhaften 3D-Druckverfahrens 400 zur Fertigung eines Werkstücks, bei dem die Nichtlineare-Absorptions-Polymerisation S3 und die optischen Kohärenztomografie S4 einander abwechselnd durchgeführt werden. Das Verfahren 400 kann beispielsweise mittels der vorstehend unter Bezugnahme auf Fig. 3 erläuterten 3D-Druckvorrichtung durchgeführt werden, wobei das Einkoppelelement 10 als mechanisch verstellbarer Spiegel oder als Galvospiegel ausgebildet ist.

Nach dem Start des Verfahrens 400 werden die Verfahrensschritte S1 und S2 wie im vorstehend unter Bezugnahme auf Fig. 4a erläuterten Verfahren 200 durchgeführt. Im Unterschied zum Verfahren 200 werden die sich anschließenden Verfahrensschritte S3 und S4 jedoch nicht zeitlich parallel, sondern einander abwechselnd durchgeführt. Beispielsweise kann zunächst im Schritt S3 eine Nichtlineare-Absorptions-Polymerisation durchgeführt werden, um einen Teil der gewünschten Strukturen aus dem Ausgangsmaterial zu erzeugen. Zu einem geeigneten Zeitpunkt wird die Nichtlineare-Absorptions-Polymerisation unterbrochen und das Verfahren geht weiter zu Verfahrensschritt S4, in dem eine Analyse mittels optischer Kohärenztomografie durchgeführt wird. Hierzu wird auf die obigen Erläuterungen zu Verfahrensschritt S4 unter Bezugnahme auf Fig. 4a verwiesen.

Ist die Analyse mittels optischer Kohärenztomografie beendet, geht das Verfahren zurück zu Verfahrensschritt S3 und die Nichtlineare-Absorptions-Polymerisation wird fortgesetzt. Die Verfahrensschritte S3 und S4 wechseln sich solange ab, bis alle gewünschten Strukturen hergestellt worden sind. Anschließend wird überschüssiges Ausgangsmaterial im Verfahrensschritt S5 ausgewaschen, so dass das gefertigte Werkstück erhalten wird. Das Verfahren 400 ist damit beendet.

Alternativ kann vor der erstmaligen Durchführung des Verfahrensschritts S3 auch zunächst Verfahrensschritt S4, d. h. die optische Kohärenztomografie, durchgeführt werden, um beispielsweise das Ausgangsmaterial zu analysieren oder die Substratausrichtung zu prüfen.

Die beiden unter Bezugnahme auf Fig. 4a und Fig. 4b erläuterten 3D-Druckverfahren 200, 400 können auch miteinander kombiniert werden, d. h. die Verfahrensschritte S3 und S4 können auch teilweise gleichzeitig und teilweise einander abwechselnd durchgeführt werden.

Alle nachfolgend beschriebenen Verfahren, die eine Analyse mittels optischer Kohärenztomografie umfassen, wurden mit einer selbstgebauten 3D-Druckvorrichtung durchgeführt. Die optische Kohärenztomografie erfolgte dabei im Fourier-Bereich unter Verwendung einer Strahlungsquelle mit einer zentralen Wellenlänge von 845 nm und einer nominalen Halbwertsbreite (FWHM) von 135 nm (fasergekoppelte Superlumineszenzdiode, Modell: Exalos EXC250002- 00), mit der eine gemessene axiale Auflösung von 2,7 µm und eine laterale Auflösung von 2,2 µm sowie eine maximale Empfindlichkeit von 105 dB erreicht werden. Die Abtastgeschwindigkeit oder A-Scan-Frequenz betrug 25 kHz für jeden B-Scan (2D-Bild, das aus mehreren A-Scans, d. h. einzelnen Tiefensignalen bzw. Einzelscans gebildet wird).

Unter Bezugnahme auf Fig. 5 wird nachfolgend ein Verfahren zur Analyse der Qualität eines Ausgangsmaterials der Nichtlinearen-Absorptions-Polymerisation mittels optischer Kohärenztomografie näher erläutert. Bei diesem Verfahren wird ein Qualitätsparameter des Ausgangsmaterials mittels optischer Kohärenztomografie ermittelt.

Zur Qualitätsanalyse des Ausgangsmaterials werden vor Beginn der Nichtlinearen-Absorptions-Polymerisation volumetrische Bilder mittels optischer Kohärenztomografie (3D-OCT-Scans) aufgezeichnet und ausgewertet. Im Rahmen der Auswertung werden ein oder mehrere Qualitätsparameter ermittelt. Diese Qualitätsparameter können beispielsweise darüber Auskunft geben, ob die 3D-OCT-Scans und damit das untersuchte Ausgangsmaterial Verunreinigungen zeigen, wie groß der Anteil der Verunreinigungen ist, welche Größe und/oder Größenverteilung die Verunreinigungen aufweisen, wie die Verunreinigungen innerhalb des Ausgangsmaterials verteilt sind, etc.. Außerdem können auch die 3D-Koordinaten der Verunreinigungen ermittelt werden. Die Auswertung kann computergestützt und optional mittels Verfahren der künstlichen Intelligenz erfolgen. Anhand dieser Informationen kann nachfolgend die Eignung des Ausgangsmaterials für das geplante 3D-Druckverfahren beurteilt werden. Auch diese Beurteilung kann computergestützt und optional mittels Verfahren der künstlichen Intelligenz erfolgen.

Fig. 5 zeigt als Schwarz-Weiß-Strichzeichnungen vereinfachte 3D-OCT-Scans eines gealterten Ausgangsmaterials (links) und eines frischen Ausgangsmaterials (rechts). Beide Ausgangsmaterialien wurden zur Anfertigung der 3D-OCT-Scans auf ein Glassubstrat aufgetragen.

Im Falle des gealterten Ausgangsmaterials (linke Abbildung) kann das Vorhandensein vieler mikroskaliger, intrinsischer Inhomogenitäten als Verunreinigungen beobachtet werden, während der als Schwarz-Weiß-Strichzeichnung vereinfachte 3D-OCT-Scan des frischen Ausgangsmaterials (rechte Abbildung) kaum Verunreinigungen zeigt. Je nach gestellten Anforderungen an das Ausgangsmaterial kann anschließend beurteilt werden, ob auch das gealterte Ausgangsmaterial weiterhin verwendbar ist oder verworfen werden sollte.

Wird das zuvor wie beschrieben analysierte Ausgangsmaterial für den 3D-Druck mittels Nichtlinearer-Absorptions-Polymerisation verwendet, können bei der Qualitätsanalyse ermittelte Qualitätsparameter, wie z. B. der Anteil und die 3D-Koordinaten der Verunreinigungen, zur Festlegung und Optimierung der Parameter der Nichtlinearen-Absorptions-Polymerisation, z. B. der sogenannten Laserschreibparameter, verwendet werden. Dadurch können die Morphologie und Eigenschaften der gefertigten Werkstücke beeinflusst werden. Es können Werkstücke mit verbesserter Qualität erhalten werden.

Außerdem besteht die Möglichkeit, die vor der Nichtlinearen-Absorptions-Polymerisation analysierten Volumina mit Verunreinigungen nach der Nichtlinearen-Absorptions-Polymerisation erneut zu kontrollieren, um die Qualität des Werkstücks in der Nähe der zuvor festgestellten Verunreinigungen zu bewerten. Hierdurch können Erkenntnisse über die Beeinflussung der Qualität des gefertigten Werkstücks durch das Vorhandensein von Verunreinigungen abgeleitet werden. Mit anderen Worten kann eine Qualitätsanalyse vor, während und/oder nach der Nichtlinearen-Absorptions-Polymerisation durchgeführt werden.

Unter Bezugnahme auf Fig. 6a und Fig. 6b wird nachfolgend ein Verfahren zur Ermittlung eines Umwandlungsgrads bei einer Nichtlinearen-Absorptions-Polymerisation mittels optischer Kohärenztomografie näher erläutert.

Grundgedanke ist es, den Umwandlungsgrad anhand des Brechungsindex zu bestimmen. Das ist möglich, weil sich durch die Polymerisation die Dichte des Materials erhöht und damit der Brechungsindex steigt. Der lokale Brechungsindex lässt sich leicht ermitteln, wenn angenommen wird, dass das Brechungsindexprofil aus Sprüngen besteht. In diesem Fall kann, sofern ein Brechungsindex bekannt ist, der andere Brechungsindex aus den Fresnel-Reflexionskoeffizienten bestimmt werden. An der Grenzfläche zu einem Glassubstrat zum Beispiel ist der Brechungsindex des Glassubstrats bekannt, so dass der Brechungsindex des angrenzenden Polymers oder Monomers bestimmt werden kann.

Die ortsaufgelöste Ermittlung des Umwandlungsgrads kann daher in-situ mit optischer Kohärenztomografie erfolgen, indem das Signal der optischen Kohärenztomografie, das von der Reflexion an der Grenzfläche zwischen Polymer und Substrat herrührt, erfasst wird und daraus zunächst ortsaufgelöst der Brechungsindex bestimmt wird. Fig. 6a, b zeigen den Einfluss der Leistung des für die Nichtlineare-Absorptions-Polymerisation genutzten Lasers auf den Brechungsindex des erzeugten Polymers und damit den Umwandlungsgrad für eine geringe Druckgeschwindigkeit von 10 mm/s (Fig. 6a) und eine hohe Druckgeschwindigkeit von 30 mm/s (Fig. 6b). Der Brechungsindex wurde jeweils in-situ unmittelbar nach der Laserbestrahlung mittels optischer Kohärenztomografie ermittelt. Die eingezeichneten Fehlerbalken repräsentieren die Standardabweichung bei sechs Messungen, die an sechs verschiedenen Proben mit der gleichen Laserleistung bei gleicher Druckgeschwindigkeit durchgeführt wurden.

Ein Vergleich der Fig. 6a und Fig. 6b zeigt, dass bei höherer Druckgeschwindigkeit eine höhere Laserleistung zum Erreichen des gleichen Brechungsindex erforderlich ist. Weiterhin ist ersichtlich, dass bei einer Geschwindigkeit von 10 mm/s ab einer Laserleistung von ca. 17,5 mW der Brechungsindex nur noch unwesentlich zunimmt und daher der maximale Umwandlungsgrad erreicht worden zu sein scheint. Bei einer Geschwindigkeit von 30 mm/s ist dies erst bei einer Laserleistung von ca. 22,5 mW der Fall. Für beide Geschwindigkeiten ist der maximal erreichbare Brechungsindex ungefähr identisch, so dass für beide Kombinationen von Geschwindigkeit und Laserleistung der maximale Umwandlungsgrad prinzipiell erreicht werden kann.

Der ortsaufgelöst ermittelte Umwandlungsgrad kann in eine Festlegung der Parameter der Nichtlinearen-Absorptions-Polymerisation einfließen. Beispielsweise können bei zu geringem Umwandlungsgrad die Strahlungsleistung erhöht, und/oder die Belichtungszeit durch Verringerung der Druckgeschwindigkeit verlängert werden, um einen höheren Umwandlungsgrad zu erreichen. Da die Ermittlung des Umwandlungsgrads in-situ erfolgen kann, können die gewünschten Parameter der Nichtlinearen-Absorptions-Polymerisation schneller aufgefunden werden. Vorteilhaft können so Werkstücke mit höherer Qualität in kürzerer Zeitdauer gefertigt werden.

Unter Bezugnahme auf Fig. 7a und Fig. 7b wird nachfolgend ein Verfahren zur Analyse einer Strukturschärfe von durch Nichtlineare-Absorptions-Polymerisation erzeugten Strukturen näher erläutert.

Zur Ermittlung und Beurteilung der Strukturschärfe werden volumetrische Bilder mittels optischer Kohärenztomografie (3D-OCT-Scans) aufgezeichnet und ausgewertet. Im Rahmen der Auswertung wird ermittelt, wie abrupt sich der Brechungsindex an charakteristischen Punkten ändert. Ändert sich der Brechungsindex abrupt, so kann auf eine hohe Strukturschärfe geschlossen werden. Ändert sich der Brechungsindex hingegen nur allmählich, so ist die Strukturschärfe gering. Die Ermittlung und Beurteilung der Strukturschärfe kann computergestützt und optional mittels Verfahren der künstlichen Intelligenz anhand des mittels optischer Kohärenztomografie ermittelten ortsaufgelösten Brechungsindexverlaufs erfolgen.

Das Signal der optischen Kohärenztomografie ist abhängig von Brechungsindexprofil zwischen dem unpolymerisierten und dem polymerisierten Ausgangsmaterial und wird daher durch das Vorhandensein einer Grenzfläche zwischen dem unpolymerisierten und dem polymerisierten Ausgangsmaterial beeinflusst. Anhand von Scans der optischen Kohärenztomografie an ausgewählten Positionen entlang der Grenzfläche und in regelmäßigen Zeitabständen kann die Strukturschärfe während des 3D-Druckvorgangs kontrolliert werden.

Fig. 7a und Fig. 7b zeigen beispielhafte Messdaten für Werkstücke, die mit unterschiedlichen Laserleistungen gedruckt und in unpolymerisiertes Ausgangsmaterial eingetaucht wurden. Dargestellt ist die Zeitabhängigkeit des OCT-Signals (Signal der optischen Kohärenztomografie), welches an der sich ausbildenden Grenzfläche zwischen unpolymerisierten und dem polymerisierten Ausgangsmaterial aufgezeichnet wurde. Das OCT-Signal ist in der logarithmischen Einheit Dezibel (dB) aufgetragen. Fig. 7a zeigt Messdaten einer Probe, bei der ein bereits polymerisiertes Ausgangsmaterial nach seiner Entwicklung in flüssiges Ausgangsmaterial getaucht wurde. Fig. 7b zeigt eine in-situ Messung, bei der ein polymerisiertes Ausgangsmaterial während der optischen Kohärenztomografie im umgebenden unpolymerisierten Ausgangsmaterial belassen wurde. In Fig. 7a und Fig. 7b sind Messdaten für jeweils drei verschiedene Proben dargestellt, bei denen die Nichtlineare-Absorptions-Polymerisation mit unterschiedlichen Laserleistungen erfolgte - in Fig. 7a 25 mW, 27 mW und 29 mW, in Fig. 7b 21 mW, 23 mW und 25 mW. Als Ausgangsmaterial wurde jeweils das Produkt IP Dip^{®}des Herstellers Nanoscribe GmbH verwendet. Fig. 7a und Fig. 7b zeigen, wie das OCT-Signal im Laufe der Zeit in Abhängigkeit von der Leistung des Schreiblasers abnimmt. Für die entwickelten bzw. polymerisierten Strukturen (Abb. 7a) gilt: Mit steigender Laserleistung besteht eine Tendenz zur Abnahme der exponentiellen Abklingkonstante (Abflachung der Kurve). Dieses Signalverhalten wird von den Erfindern auf die Verwischung des Brechungsindexübergangs zwischen Polymermatrix und Monomer aufgrund von Diffusionsprozessen zurückgeführt. In Abb. 7b sind keine Abhängigkeiten des OCT-Signals von der Laserleistung ersichtlich. In diesem Fall hat die Diffusion wahrscheinlich einen komplexeren und stochastischen Charakter.

Unter Bezugnahme auf Fig. 8 wird nachfolgend ein Verfahren zur dreidimensionalen Rekonstruktion eines Profils der Strahlungsexposition eines Ausgangsmaterials während einer Nichtlinearen-Absorptions-Polymerisation mittels optischer Kohärenztomografie näher erläutert.

Wie bereits einleitend erläutert, setzen bekannte Verfahren zur Rekonstruktion von Morphologien nach Beendigung des 3D-Druckvorgangs Imperfektionen im gedruckten Werkstück, die zu Inhomogenitäten des Brechungsindex führen, voraus. Fig. 8a, linke Abbildung zeigt eine 3D-OCT-Scan-Rekonstruktion eines mittels Nichtlinearer-Absorptions-Polymerisation gefertigten Werkstücks. Die bei der Fertigung eingebrachte kreuzweise Schraffur, deren Modell in Fig. 8a, rechte Abbildung gezeigt ist, führt zu einem inhomogenen Brechungsindex innerhalb des gefertigten Werkstücks, so dass die Rekonstruktion vollständig anhand von nach dem 3D-Druck durchgeführten OCT-Scans erfolgen kann.

Demgegenüber führen beispielsweise vertikale Seitenwände zwischen Regionen mit abschnittsweise konstantem Brechungsindex nicht zu einem Signal der optischen Kohärenztomografie, falls die für die optische Kohärenztomografie genutzte Strahlung von oben, d. h. parallel zur Seitenwand, auf den Analyseort auftrifft. Sie können daher nicht oder nur eingeschränkt rekonstruiert werden. Fig. 8b, rechte Abbildung zeigt eine 3D-OCT-Scan-Rekonstruktion eines mittels Nichtlinearer-Absorptions-Polymerisation gefertigten Werkstücks. Die bei der Fertigung eingebrachte unidirektionale Schraffur, deren Modell in Fig. 8b, linke Abbildung gezeigt ist, führt zu einem homogenen Brechungsindex innerhalb des gefertigten Werkstücks. Die vertikalen Seitenwände können daher nicht mittels OCT-Scans erfasst werden, so dass die Rekonstruktion nur unvollständig anhand von nach dem 3D-Druck durchgeführten OCT-Scans erfolgen kann.

Das hier vorgeschlagene verbesserte Verfahren zur 3D-Rekonstruktion sieht vor, dass OCT-Scans in-situ durchgeführt werden, wobei sich Sequenzen, in denen mittels Nichtlinearer-Absorptions-Polymerisation gedruckt wird, und Sequenzen, in denen eine Analyse mittels optischer Kohärenztomografie erfolgt, einander abwechseln. Das jeweilige OCT-Signal wird dabei an der Grenzfläche zwischen Materialien mit unterschiedlichen Brechungsindices, z. B. an der Grenzfläche zwischen Ausgangsmaterial mit niedrigem und höherem Polymerisationsgrad, erzeugt, sofern der Brechungsindexunterschied groß genug ist, um das Licht bzw. die Strahlung zurückzustreuen. Die Positionsänderung der Grenzfläche mit fortschreitendem 3D-Druck kann mittels optischer Kohärenztomografie verfolgt werden. Aus mehreren einzelnen OCT-Scans kann schließlich die gesamte Morphologie des gefertigten Werkstücks rekonstruiert werden.

Dies hat den Vorteil, dass eine umfassende 3D-Rekonstruktion auch möglich ist, wenn das gefertigte, d. h. fertiggestellte, Werkstück Oberflächen enthält, die kein erkennbares OCT-Signal erzeugen.

Die Häufigkeit der OCT-Scans kann fest vorgegeben sein oder werden, beispielsweise in Abhängigkeit der verstrichenen Druckzeit, d. h. der Zeitdauer, während der die Nichtlineare-Absorptions-Polymerisation durchgeführt wurde. Dies hat den Vorteil einer einfachen messtechnischen Umsetzung.

Optional kann die Häufigkeit der OCT-Scans optimiert, d. h. an die konkrete Drucksituation, beispielsweise in Abhängigkeit der erwarteten Morphologie des Werkstücks gemäß dem zugehörigen CAD-Modell, des Ausgangsmaterials, der Strahlungsleistung, etc., angepasst werden. Einerseits sollten so viele gedruckte Schichten wie möglich abgebildet werden, um das gedruckte Werkstück möglichst genau zu rekonstruieren. Andererseits sollte die Häufigkeit der OCT-Scans so angepasst werden, dass eine vollständige Nachpolymerisation der geprüften Schichten möglich ist und nachteilige Verzögerungen beim 3D-Druck vermieden werden.

Eine Strategie kann darin bestehen, die Häufigkeit der OCT-Scans in Abhängigkeit von der abzubildenden Morphologie anzupassen. Beispielsweise kann ein großes Volumen auf einmal abgebildet werden, z. B. zur Rekonstruktion von Morphologien von bezüglich der einfallenden Strahlung zur Durchführung der optischen Kohärenztomografie geneigten Seitenwänden. Für die Rekonstruktion von Elementen, wie z. B. Seitenwänden, die mit einer einzigen OCT-Erfassung nicht abgebildet werden können, d. h. von Elementen die in Richtung der einfallenden Strahlung zur Durchführung der optischen Kohärenztomografie ausgerichtet sind, kann die Häufigkeit der OCT-Scans erhöht werden.

Die Häufigkeit der OCT-Scans kann beispielsweise anhand einer Analyse des entsprechenden 3D-(CAD-)Modells vor Beginn des 3D-Drucks festgelegt und bei Bedarf in ein Steuersystem zur Steuerung der 3D-Druckvorrichtung implementiert werden.

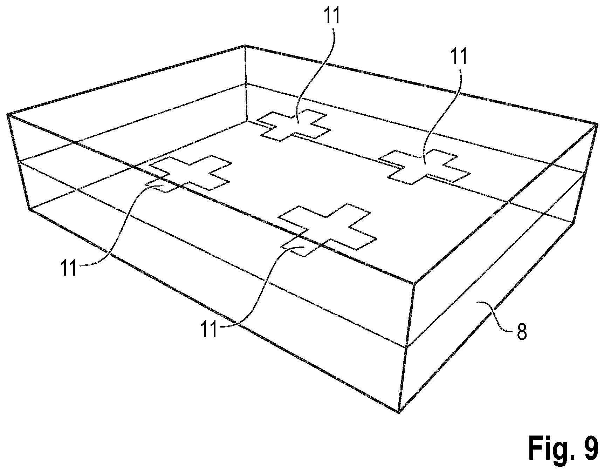

Unter Bezugnahme auf Fig. 9 wird nachfolgend ein Verfahren zur Überprüfung der Position und/oder Ausrichtung eines mittels Nichtlinearer-Absorptions-Polymerisation zu bedruckenden Substrats 8 näher erläutert. Fig. 9 zeigt ein transparentes Substrat 9, in welches vier kreuzförmige charakteristische Markierungen 11 eingebracht sind. Die Position und Ausrichtung der charakteristischen Markierungen 11 bezüglich des Substrats 8 ist bekannt, so dass durch Lokalisierung der charakteristischen Merkmale 11 die Position und Ausrichtung der Substrats 8 ermittelt werden kann.

Hierfür werden ein oder mehrere der charakteristischen Merkmale 11 des zu bedruckenden Substrats 8 mittels optischer Kohärenztomografie, d. h. anhand von zwei- oder bevorzugt dreidimensionalen OCT-Aufnahmen, identifiziert.

Die Überprüfung der Position und/oder Ausrichtung mittels optischer Kohärenztomografie kann u. a. in den nachfolgend beschriebenen Fällen durchgeführt werden.

Wenn der zu bedruckende Substratbereich nicht mit einer Echtzeitkamera der 3D-Druckvorrichtung abgebildet werden kann, z. B. wenn er sich an einer schrägen Seitenwand befindet oder wenn er verdeckt wird, kann optische Kohärenztomografie verwendet werden, um den zu bedruckenden Substratbereich abzubilden und die zugehörigen Koordinaten, ggf. auch in Bezug auf den das zu bedruckenden Substratbereich verdeckenden Abschnitt, zu ermitteln. Dies setzt voraus, dass der Absorptionskoeffizient des Materials des verdeckenden Abschnitts nicht die Erfassung des Signals der optischen Kohärenztomografie verhindert.

Optische Kohärenztomografie kann auch zur Lokalisierung von charakteristischen Merkmalen 11 dienen, die mit einer Echtzeitkamera nicht abgebildet werden können, entweder aufgrund der Ausrichtung des Substrats 8, der Morphologie des bereits gedruckten Abschnitts oder weil die charakteristischen Merkmale 11 absichtlich im Inneren des Substrats 8 eingebettet sind, z. B. charakteristische Merkmale 11 in Form von Ausrichtungsmarkierungen, die mit einem fs-Laser direkt in das Volumen eines Glassubstrats geschrieben wurden, oder Ausrichtungsmarkierungen, die mit Nichtlinearer-Absorptions-Polymerisation geschrieben und anschließend mit einem anderen Fotolack abgedeckt wurden, um einen Brechungsindexkontrast unter der Oberfläche zu erzeugen.

Da die optische Kohärenztomografie sehr empfindlich auf Brechungsindexkontraste reagiert und die Abbildung unter der Oberfläche von Materialien mit geringer bis moderater Absorption und Streuung, d. h. solange das rückgestreute Signal der Empfindlichkeit des OCT-Systems entspricht, ermöglicht, kann optische Kohärenztomografie für die Überprüfung der Substratposition und/oder Substratausrichtung innerhalb einer Anordnung von Elementen mit identischer Topografie verwendet werden, die sich nur durch ihren Brechungsindex wie beim Multimaterialdruck oder durch ihre inneren Strukturen, z. B. Elemente mit unterschiedlicher Porosität, unterscheiden.

Nachdem die Substratposition und/oder Substratausrichtung überprüft wurde, kann ermittelt werden, ob die gefundene Substratposition und/oder Substratausrichtung der gewünschten Substratposition und/oder Substratausrichtung entspricht. Ist dies nicht der Fall, so kann die Position und/oder Ausrichtung des Substrats 8 entsprechend geändert und ggf. nochmal mittels optischer Kohärenztomografie überprüft werden.

### Bezugszeichenliste

- 1: erste Strahlungsquelle
- 2: erste Strahlung
- 3: zweite Strahlungsquelle
- 4: zweite Strahlung
- 5: erster Strahlengang
- 6: zweiter Strahlengang
- 7: Fokuspunkt
- 8: Substrat
- 9: optisches System
- 10: Einkoppelelement
- 11: charakteristisches Merkmal
- 12: Ausgangsmaterial
- 13: Behältnis
- 14: Immersionsflüssigkeit
- 15: erstes Objektiv
- 16: zweites Objektiv
- 17: Spiegel
- 18: Objektiv
- 19: Linse
- 20: Galvospiegel x-Richtung
- 21: Galvospiegel y-Richtung
- 22: Faserkoppler
- 23: Analyseeinheit

- 100: 3D-Druckvorrichtung
- 200: 3D-Druckverfahren
- 300: 3D-Druckvorrichtung
- 400: 3D-Druckverfahren

- 3D: dreidimensional
- CAD: computer-aided design
- CW: continuous wave
- NA: numerische Apertur
- fs: Femtosekunde
- OCT: optische Kohärenztomografie
- S1: Bereitstellen eines Substrats
- S2: Positionieren des Substrats im Ausgangsmaterial
- S3: Durchführen einer Nichtlinearen-Absorptions-Polymerisation
- S4: Durchführen einer optischen Kohärenztomografie
- S5: Auswaschen überschüssigen Ausgangsmaterials

- α: Winkel, unter dem die erste Strahlung und die zweite Strahlung aufeinandertreffen
- ω: Öffnungswinkel des zweiten Strahlengangs

## Patentansprüche

1. 3D-Druckvorrichtung (100) zur Fertigung eines Werkstücks, die Vorrichtung (100) aufweisend:
- eine erste Strahlungsquelle (1), ausgebildet zum Aussenden einer ersten Strahlung (2) zur Durchführung einer Nichtlinearen-Absorptions-Polymerisation, und
- eine zweite Strahlungsquelle (3), ausgebildet zum Aussenden einer zweiten Strahlung (4) zur Durchführung einer optischen Kohärenztomografie,
wobei ein erster Strahlengang (5) von der ersten Strahlung (2) und ein zweiter Strahlengang (6) von der zweiten Strahlung (4) passierbar sind, **dadurch gekennzeichnet, dass**
der erste Strahlengang (5) und der zweite Strahlengang (6) vollständig voneinander unabhängig ausgebildet sind.

2. Vorrichtung (100) nach Anspruch 1, wobei der erste Strahlengang (5) und der zweite Strahlengang (6) derart ausgebildet sind, dass die erste Strahlung (2) und die zweite Strahlung (4) unter einem Winkel α aufeinander treffen, wobei 0°< α < 180 °, beispielsweise 0°< α ≤ 90 °, gilt.

3. Vorrichtung (100) nach Anspruch 2, wobei α = 90° - ω/2 gilt, wobei ω der objektseitige Öffnungswinkel des zweiten Strahlengangs (6) ist.

4. Vorrichtung (100) nach einem der vorstehenden Ansprüche, wobei der erste Strahlengang (5) derart ausgebildet ist, dass die erste Strahlung (2) parallel zu einer Normalen einer Substratoberfläche des zu bedruckenden Substrats (8) auf die Substratoberfläche auftrifft.

5. Vorrichtung (100) nach einem der vorstehenden Ansprüche, wobei der zweite Strahlengang (6) derart ausgebildet ist, dass die zweite Strahlung (4) mit einem von 90° zur Normalen der Substratoberfläche des zu bedruckenden Substrats (8) verschiedenen Winkel auf die Substratoberfläche auftrifft.

6. Vorrichtung (100) nach Anspruch 5, wobei der zweite Strahlengang (6) derart ausgebildet ist, dass die zweite Strahlung (4) mit einem Winkel zur Normalen der Substratoberfläche des zu bedruckenden Substrats (8), der kleiner als 90° ist, auf die Substratoberfläche auftrifft.

7. Vorrichtung (100) nach einem der vorstehenden Ansprüche, wobei der zweite Strahlengang (6) derart ausgebildet ist, dass die zweite Strahlung (4) durch ein zu bedruckendes Substrat (8) hindurch auf einen Fokuspunkt (7) auftrifft.

8. 3D-Druckvorrichtung (300) zur Fertigung eines Werkstücks, die Vorrichtung (300) aufweisend:
- eine erste Strahlungsquelle (1), ausgebildet zum Aussenden einer ersten Strahlung (2) zur Durchführung einer Nichtlinearen-Absorptions-Polymerisation,
- eine zweite Strahlungsquelle (3), ausgebildet zum Aussenden einer zweiten Strahlung (4) zur Durchführung einer optischen Kohärenztomografie,
wobei die erste Strahlungsquelle (1) und die zweite Strahlungsquelle (3) derart angeordnet sind, dass ein optisches System (9) zumindest teilweise gemeinsam von der ersten Strahlung (2) und der zweiten Strahlung (4) nutzbar ist,
- ein im optischen System (9) angeordnetes Objektiv (18), ausgebildet zur Fokussierung der ersten und zweiten Strahlung auf einen Fokuspunkt, und
- ein Einkoppelelement (10), ausgebildet zur Einkopplung der ersten Strahlung (2) und/oder der zweiten Strahlung (4) in das optische System (9),
**dadurch gekennzeichnet, dass**
das Einkoppelelement (10) ausgewählt ist aus einer Gruppe bestehend aus einem mechanisch verstellbaren Spiegel, einem Galvospiegel einem polarisierenden Strahlteiler, einem Intensitätsteiler und einem teilweise beschichteten Spiegel.

9. Vorrichtung (100, 300) nach einem der vorstehenden Ansprüche, aufweisend:
- eine Analyseeinheit (23), eingerichtet und ausgebildet zur Generierung von Bildaufnahmen der optischen Kohärenztomografie basierend auf der zweiten Strahlung (4), wobei die Analyseeinheit (23) mehrere Messkanäle derart aufweist, dass mehrere Analyseorte gleichzeitig mittels optischer Kohärenztomografie analysiert werden können.

10. Vorrichtung (100, 300) nach einem der vorstehenden Ansprüche,
wobei die zweite Strahlungsquelle (3) eine zeitlich konstante Welle als zweite Strahlung aussendet.

11. Vorrichtung (100, 300) nach einem der vorstehenden Ansprüche, aufweisend:
- ein Behältnis (13) zur Anordnung eines zu polymerisierenden Ausgangsmaterials (12), wobei das Behältnis (13) zumindest teilweise transparent für die erste Strahlung (2) und/oder zweite Strahlung (4) ausgebildet ist.

12. Vorrichtung (100, 300) nach einem der vorstehenden Ansprüche, wobei ein Objektiv (18) der Vorrichtung (100, 300) derart ausgebildet und angeordnet ist, dass es in ein zu polymerisierendes Ausgangsmaterial (12) eingetaucht werden kann.

13. 3D-Druckverfahren (200, 400) zur Fertigung eines Werkstücks mittels einer Vorrichtung (100, 300) nach einem der vorstehenden Ansprüche, wobei die Nichtlineare-Absorptions-Polymerisation (S3) und die optischen Kohärenztomografie (S4) einander abwechselnd oder gleichzeitig durchgeführt werden.

## Claims

1. 3D printing apparatus (100) for manufacture of a workpiece, the apparatus (100) having:
- a first radiation source (1) designed to emit a first radiation (2) for performance of nonlinear absorption polymerization, and
- a second radiation source (3) designed to emit a second radiation (4) for performance of optical coherence tomography,
wherein a first beam path (5) is traversable by the first radiation (2) and a second beam path (6) is traversable by the second radiation (4), **characterized in that** the first beam path (5) and the second beam path (6) are formed entirely independently of one another.

2. Apparatus (100) according to Claim 1, wherein the first beam path (5) and the second beam path (6) are formed such that the first radiation (2) and the second radiation (4) are incident on one another at an angle α, where 0° < α < 180°, for example 0° < α ≤ 90°.

3. Apparatus (100) according to Claim 2, wherein α = 90° - ω/2, where ω is the object-side opening angle of the second beam path (6).

4. Apparatus (100) according to any of the preceding claims, wherein the first beam path (5) is formed such that the first radiation (2) hits the substrate surface parallel to a normal of a substrate surface of the substrate (8) to be printed.

5. Apparatus (100) according to any of the preceding claims, wherein the second beam path (6) is formed such that the second radiation (4) hits the substrate surface at a non-90° angle to the normal of the substrate surface of the substrate (8) to be printed.

6. Apparatus (100) according to Claim 5, wherein the second beam path (6) is formed such that the second radiation (4) hits the substrate surface at an angle of less than 90° to the normal of the substrate surface of the substrate (8) to be printed.

7. Apparatus (100) according to any of the preceding claims, wherein the second beam path (6) is formed such that the second radiation (4) hits a focal point (7) through a substrate (8) to be printed.

8. 3D printing apparatus (300) for manufacture of a workpiece, the apparatus (300) having:
- a first radiation source (1) designed to emit a first radiation (2) for performance of nonlinear absorption polymerization,
- a second radiation source (3) designed to emit a second radiation (4) for performance of optical coherence tomography,
wherein the first radiation source (1) and the second radiation source (3) are arranged such that an optical system (9) is at least partly utilizable collectively by the first radiation (2) and the second radiation (4),
- an objective lens (18) disposed in the optical system (9) and designed to focus the first and second radiation to a focal point, and
- an input coupling element (10) designed to couple the first radiation (2) and/or the second radiation (4) into the optical system (9),
**characterized in that**
the input coupling element (10) is selected from a group consisting of a mechanically adjustable mirror, a galvanomirror, a polarizing beam divider, an intensity divider and a partly coated mirror.

9. Apparatus (100, 300) according to any of the preceding claims, having:
- an analysis unit (23), set up and designed to generate optical coherence tomography images based on the second radiation (4), wherein the analysis unit (23) has multiple measurement channels such that multiple analysis sites can be analyzed simultaneously by optical coherence tomography.

10. Apparatus (100, 300) according to any of the preceding claims, wherein the second radiation source (3) emits a wave which is constant over time as the second radiation.

11. Apparatus (100, 300) according to any of the preceding claims, having:
- a vessel (13) for positioning of a starting material (12) to be polymerized, wherein the vessel (13) is designed to be at least partly transparent to the first radiation (2) and/or second radiation (4).

12. Apparatus (100, 300) according to any of the preceding claims, wherein an objective lens (18) of the apparatus (100, 300) is designed and arranged such that it can be immersed into a starting material (12) to be polymerized.

13. 3D printing method (200, 400) for manufacture of a workpiece by means of an apparatus (100, 300) according to any of the preceding claims, wherein nonlinear absorption polymerization (S3) and optical coherence tomography (S4) are conducted in mutual alternation or simultaneously.

## Revendications

1. Dispositif d'impression 3D (100) pour la fabrication d'une pièce, le dispositif (100) comprenant :
- une première source (1) d'émission de faisceau, conçue pour émettre un premier faisceau (2) afin de réaliser une polymérisation par absorption non linéaire, et
- une deuxième source (3) d'émission de faisceau, conçue pour émettre un deuxième faisceau (4) afin de réaliser une tomographie par cohérence optique,
un premier trajet (5) de faisceau du premier faisceau (2) et un deuxième trajet (6) de faisceau du deuxième faisceau (4) étant traversables, **caractérisé en ce que** le premier trajet (5) de faisceau et le deuxième trajet (6) de faisceau sont complètement indépendants l'un de l'autre.

2. Dispositif (100) selon la revendication 1, dans lequel le premier trajet (5) de faisceau et le deuxième trajet (6) de faisceau sont conçus de telle sorte que le premier faisceau (2) et le deuxième faisceau (4) se rencontrent selon un angle α, avec 0° < α < 180°, par exemple 0° < α ≤ 90°.

3. Dispositif (100) selon la revendication 2, dans lequel α = 90°-ω/2, ω étant l'angle d'ouverture côté objet du deuxième trajet (6) de faisceau.

4. Dispositif (100) selon l'une des revendications précédentes, dans lequel le premier trajet (5) de faisceau est conçu de telle sorte que le premier faisceau (2) frappe la surface du substrat à imprimer (8) parallèlement à une normale à la surface du substrat.

5. Dispositif (100) selon l'une des revendications précédentes, dans lequel le deuxième trajet (6) de faisceau est conçu de telle sorte que le deuxième faisceau (4) frappe la surface du substrat avec un angle différent de 90° par rapport à la normale à la surface du substrat (8) à imprimer.

6. Dispositif (100) selon la revendication 5, dans lequel le deuxième trajet (6) de faisceau est conçu de telle sorte que le deuxième faisceau (4) frappe la surface du substrat (8) selon un angle inférieur à 90° par rapport à la normale à la surface du substrat à imprimer.

7. Dispositif (100) selon l'une des revendications précédentes, dans lequel le deuxième trajet (6) de faisceau est conçu de telle sorte que le deuxième faisceau (4) frappe un point focal (7) à travers un substrat (8) à imprimer.

8. Dispositif d'impression 3D (300) pour la fabrication d'une pièce, le dispositif (300) comprenant :
- une première source (1) d'émission de faisceau , conçue pour émettre un premier faisceau (2) afin de réaliser une polymérisation par absorption non linéaire,
- une deuxième source (3) d'émission de faisceau, conçue pour émettre un deuxième faisceau (4) afin de réaliser une tomographie par cohérence optique,
la première source de faisceau (1) et la deuxième source de faisceau (3) étant agencées de telle sorte qu'un système optique (9) puisse être utilisé au moins en partie conjointement par le premier faisceau (2) et le deuxième faisceau (4),
- un objectif (18), agencé dans le système optique (9) et conçu pour focaliser le premier et le deuxième faisceaux sur un point focal, et
- un élément de liaison (10), conçu de manière à relier le premier faisceau (2) et/ou le deuxième faisceau (4) dans le système optique (9),
**caractérisé en ce que**
l'élément de liaison (10) est choisi dans un groupe comprenant un miroir à réglage mécanique, un miroir galvanique, un séparateur de faisceau polarisant, un séparateur d'intensité et un miroir partiellement revêtu.

9. Dispositif (100, 300) selon l'une des revendications précédentes, comprenant :
- une unité d'analyse (23), conçue et réalisée pour générer des images de tomographie par cohérence optique basées sur le deuxième faisceau (4), l'unité d'analyse (23) comprenant plusieurs canaux de mesure de telle sorte que plusieurs sites d'analyse puissent être analysés simultanément par tomographie par cohérence optique.

10. Dispositif (100, 300) selon l'une des revendications précédentes, dans lequel la deuxième source de faisceau (3) émet une onde constante dans le temps en tant que deuxième faisceau.

11. Dispositif (100, 300) selon l'une des revendications précédentes, comprenant :
- un récipient (13), pour disposer un matériau de départ (12) à polymériser, le récipient (13) étant au moins partiellement transparent au premier faisceau (2) et/ou au deuxième faisceau (4).

12. Dispositif (100, 300) selon l'une des revendications précédentes, dans lequel un objectif (18) du dispositif (100, 300) est conçu et agencé de telle sorte qu'il puisse être immergé dans un matériau de départ (12) à polymériser.

13. Procédé d'impression 3D (200, 400) pour la fabrication d'une pièce au moyen d'un dispositif (100, 300) selon l'une des revendications précédentes, dans lequel la polymérisation par absorption non linéaire (S3) et la tomographie par cohérence optique (S4) sont réalisées en alternance ou simultanément.
